# EUROPEAN PATENT APPLICATION

(11) **EP 1 220 545 A2**
(43) Date of publication of application: **03.07.2002**
(21) Application number: 01310788.3
(22) Date of filing: 21.12.2001
(51) Int. Cl.: H04N 7/173

(54) **Broadcast receiver, broadcast reception method, digital tv broadcast receiver, external terminal, broadcast receiver control system, and storage medium**

(30) Priority: 26.12.2000 JP 2000395918
(71) Applicant: CANON KABUSHIKI KAISHA, Tokyo (JP)
(72) Inventor: Ohno, Tomoyuki, Ohta-ku, Tokyo (JP); Miyamoto, Katsuhiro, Ohta-ku, Tokyo (JP); Aratani, Shuntaro, Ohta-ku, Tokyo (JP)
(74) Representative: Beresford, Keith Denis Lewis

(57) **Abstract**

A digital TV broadcast receiver, a remote operation terminal, a remote operation assistance system, a remote operation assistance method and a storage medium, are provided which are suitable for controlling various operations of the broadcast receiver from a remote site such as an outdoor place. The digital TV broadcast receiver has: a tuner (101) for receiving control data multiplexed to transport stream data transmitted from a broadcaster in response to a control request from a remote terminal; a demultiplexer (103) for deriving program information data from the control data; a second user interface screen structure unit (119) for structuring a second user operation assistance screen in accordance with the program information data; and a system control unit (114) for controlling to transmit data of the second user operation assistance screen to the remote terminal in response to a control request.

## Description

### BACKGROUND OF THE INVENTION

### Field of the Invention

The present invention relates to a broadcast receiver, a broadcast reception method, a digital TV broadcast receiver, an external terminal, a broadcast receiver control system and a storage medium, particularly to those suitable for controlling various operations of a broadcast receiver from a remote site such as an outdoor place.

### Related Background Art

In digital satellite TV broadcast using a communication satellite (CS) or a broadcast satellite (BS), an electronic program guide (EPG) is transmitted together with video data as one of viewer services. Similar service is expected also for ground wave digital satellite broadcast. Digital satellite TV broadcast and ground wave digital satellite broadcast are hereinafter collectively called "digital TV broadcast".

A digital broadcast receiver receives EPG data to display program information on a monitor. The EPG data includes a channel name, a program name, broadcast day and time, program contents and the like. A user can judge from this information whether the program is worth to be viewed.

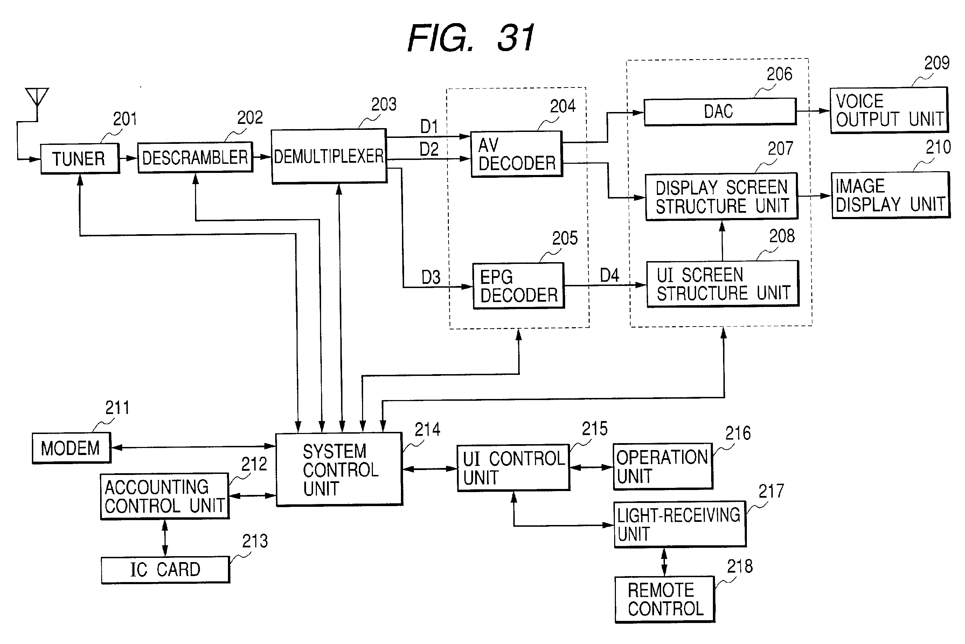

Fig. 31 is a block diagram showing an example of the structure of a conventional digital TV broadcast receiver. Referring to Fig.31, a signal received at an antenna is input to a tuner 201. The tuner 201 executes demodulation, error correction and other processes for the input signal to generate transport stream (TS) data and output it to a descrambler 202.

If TS data scrambled for audio-visual restriction (pay broadcast or the like) is input to the tuner 201, an accounting control unit 212 generates new key information by using descramble key information contained in the TS data and key information input from an IC card 213, and supplies the newly generated key information to the descrambler 202. By using the key information supplied from the accounting control unit 212, the descrambler 202 descrambles the TS data and outputs the descrambled TS data to a demultiplexer 203.

When a pay broadcast descrambled is to be viewed, fee information is stored in the IC card 213 via the accounting control unit 212. The fee information stored in the IC card 213 is transmitted to a broadcaster via the accounting control unit 212, a system control unit 214 and a modem 211.

When TS data not scrambled is supplied from the tuner 201, the descrambler 202 outputs the received TS data directly to the multiplexer 203. The demultiplexer 203 derives video data D1 and audio data D2 of a currently broadcast program on a channel selected by a remote controller 218 via an operation unit 216 or light receiving unit 217, from the TS data input from the descrambler 202 and containing a plurality channel of time-division multiplexed video and audio data sets, EPG data and the like. The demultiplexer 203 outputs the derived video data D1 and audio data D2 to an audio-video decoder 204.

The demultiplexer 203 derives EPG data D3 from the TS data and outputs it to an EPG decoder 205. The TS data is constituted of packets. The head field of each packet is added with a packet identifier (PID). The demultiplexer 203 reads PID to identify the video data D1, audio data D2 and EPG data D3.

First, the video data D1 will be described. The AV decoder 204 executes a decode process such as MPEG2 (Moving Picture Experts Group - 2) for the video data D1 input from the multiplexer 203 and outputs the decoded video data to a display screen structure unit 207. The display screen structure unit 207 selects or multiplexes video data input from the AV decoder 204 and a user interface (UI) screen structure unit 208 in response to an operation of the operation unit 216 or remote controller 218 via a UI control unit 215 and a system control unit 214, to thereby make an image display unit display the selected or multiplexed video data. The UI screen structure unit 208 will be later described. The image display unit 210 includes a monitor and video signal input terminals (not shown).

Next, the audio data D2 will be described. The AV decoder 204 executes a decode process such as MPEG1 and MEPEG2 for the audio data D2 input from the demultiplexer 203 and outputs the decoded audio data to a digital-analog converter (DAC) 206. DAC 206 executes a digital-analog conversion process for the audio data input from the AV decoder 204 and outputs analog audio data to a voice output unit 209. The voice output unit 209 includes speakers and voice signal input terminals (not shown).

Next, the EPG data D3 will be described. As a user instructs to display an EPG screen via the operation unit 216 or remote controller 218, an EPG screen display instruction from the operation unit 216 or an EPG screen display instruction from the remote controller 218 via the light receiving unit 217 is supplied to the system control unit 214 via the UI control unit 215. Upon reception of the EPG screen display instruction from the operation unit 216 or remote controller 218 via the UI control unit 215, the system control unit 214 controls the demultiplexer 203 to output information necessary for an EPG screen structure from the demultiplexer 203 to the EPG decoder 205.

The EPG data D3 contains mainly a service description table (SDT), an event information table (EIT) and a time description table (TDT) in conformity with "Program Array Information Used By Digital Broadcast" of the standard specification of Association of Radio Industry Bureaus (ARIB STD-B10). SDT contains data which describes services (corresponding to broadcast channels), such as the name of each service and a service provider. EIT contains event and program data such as the name of an event (corresponding to a program), a start time and a continuity time. TDT contains present time and date data.

The EPG decoder 205 first reads TDT to acquire a present time and output it to the system control unit 214. Upon reception of the present time, the system control unit 214 judges an EPG display time zone corresponding to the present time and outputs proper time zone information to the EPG decoder 205. In accordance with the time zone information supplied from the system control unit 214, the EPG decoder reads SDT from the demultiplexer 203 to acquire information such as channel names and channel numbers.

Next, the EPG decoder 205 reads EIT from the demultiplexer 203 to acquire information such as program names, start times, continuity times, genres, descriptions of program contents, respectively of each channel. The EPG decoder 205 executes a decode process for the EPG data D3 read from the demultiplexer 203, and outputs the decoded EPG data D4 to the UI screen structure unit 208.

In accordance with the EPG data supplied from the EPG decoder 205, the UI screen structure unit 208 structures a predetermined EPG screen and sends it to the display screen structure unit 207. The display screen structure unit 207 outputs video signals to the image display unit 210 to selectively display an image of the video data output from the AV decoder 204 or an EPG screen output from the UI screen structure unit 208 in accordance with an operation of the operation unit 216 or remote controller 218. If an EPG screen display instruction is issued from the operation unit 216 or remote controller 218, the screen supplied from the UI screen structure unit 208 is output to the image display unit 210.

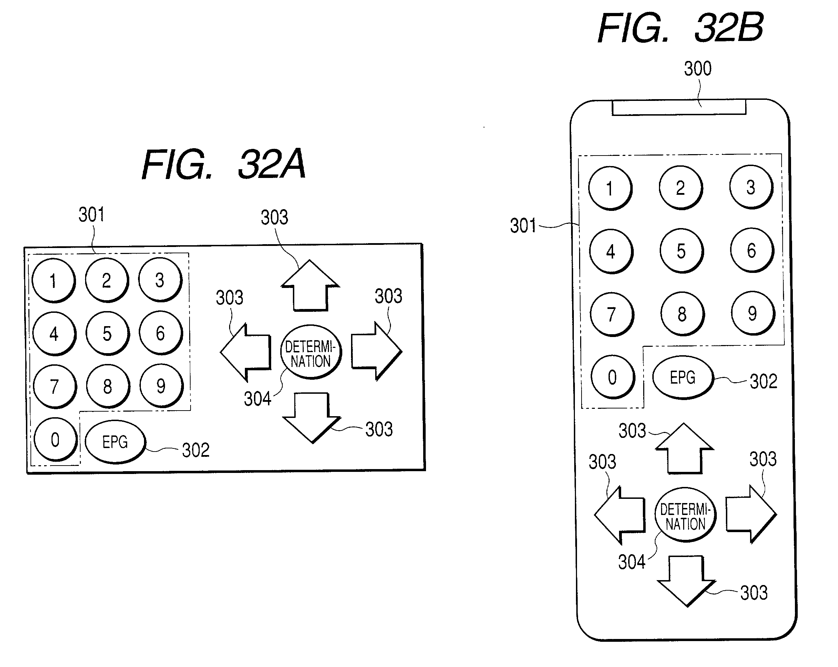

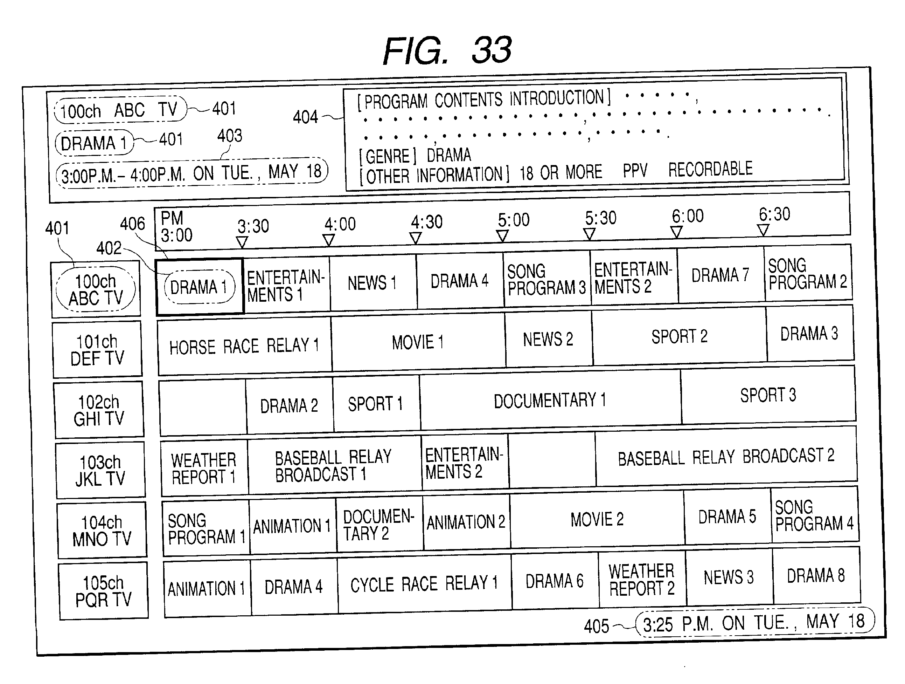

Figs. 32A and 32B show examples of the structure of the operation unit 216 or remote controller 218 shown in Fig. 31. In Figs. 32A and 32B, operation buttons necessary for the description of conventional functions are drawn. Operation buttons necessary for an actual digital TV broadcast receiver are not limited only thereto. Fig. 33 shows an example of the EPG screen to be displayed and structured as above.

In Figs. 32A and 32B, a light emission unit 300 is used for infrared ray communications with the remote controller 218 and light receiving unit 217 shown in Fig. 31. A ten-key 301 is used for inputting a channel number or the like. An EPG display button 302 is used when an EPG screen is to be displayed. Cursor buttons 303 are used for moving up/down and right/left a selection cursor to be described later. A decision button 304 is used for deciding a selection of an area designated by the selection cursor. A user using a conventional receiver can display an EPG screen, move the cursor, select a channel and perform other operations by using the operation unit 216 and remote controller 218.

In Fig. 33, reference numeral 401 represents a channel number and name to be displayed by using information contained in SDT. Reference numeral 402 represents a program name to be displayed by using information contained in EIT. Reference numeral 403 represents a program start time and continuity time (including date) to be displayed by information contained in EIT. Reference numeral 404 represents detailed program information to be displayed by using information contained in EIT. Reference numeral 405 represents a present time and date to be displayed by using information contained in TDT. Reference numeral 406 represents an EPG operation selection cursor.

For example, in the EPG screen shown in Fig. 33, the present day and time of May 18 and 3:25 p.m are displayed. A list of program names at channel numbers 100 to 105 to be broadcast from 3:00 p.m. to 7:00 p.m. is displayed. The detailed information of a "drama 1" to be broadcast from 3:00 p.m. to 4:00 p.m. at Channel 10 is displayed in an area indicated at 404.

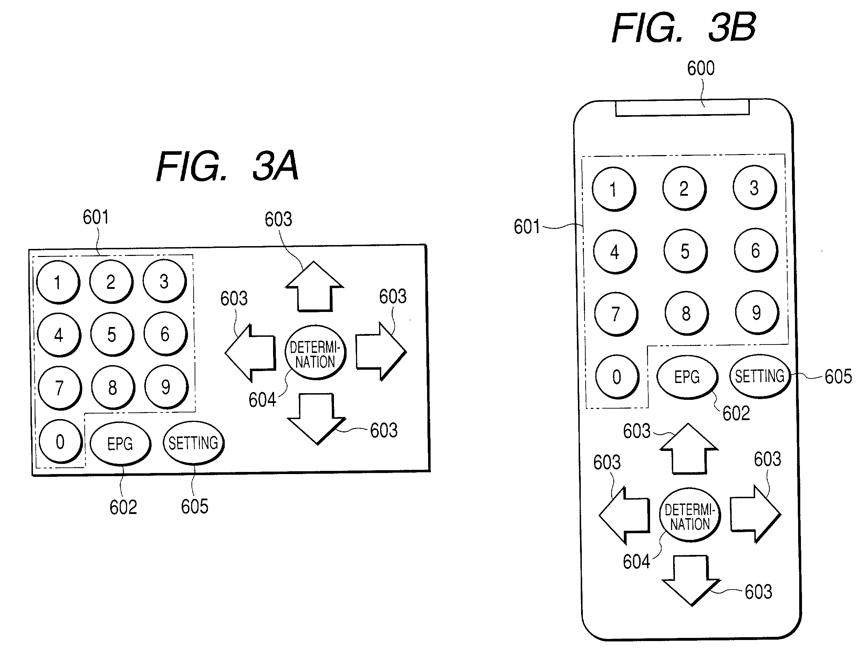

A user moves the selection cursor 406 shown in Figs. 3A and 3B to a desired program by using the cursor buttons 303 of the operation unit or remote controller shown in Figs. 32A and 32B, and depresses the decision button 304 to view the program or reserve the program. If the program is recordable, program recording and program recording reservation can be performed by using a recorder not shown in Fig. 31.

As described above, with a conventional digital TV broadcast receiver, a user can display and browse information on TV programs, view or reserve a desired program, record a desired program or perform program record reservation, by referring to the EPG screen and using the operation unit or remote controller of the receiver. If these operations can be performed at a remote site such as an outdoor place, it is possible to reserve a program, record a program or perform program record reservation from the remote site. Convenience on the user side such as picking up information of desired programs, avoiding a pass of a desired program, can be improved greatly.

A record reservation system is known which accesses an analog TV broadcast receiver via a telephone line. With such a system, however, only a few operation are possible such as a record reservation of a program whose channel number, program broadcast day and time and the like are already recognized by a user. Even if such a system is applied to a digital TV broadcast receiver, convenience on the user side cannot be expected to be improved. Namely, since a digital TV broadcast has a number of channels and data broadcast is transmitted, the receiver has various functions to improve the operability. With a conventional system, the functions of the digital TV broadcast receiver cannot be operated easily from a remote site such as an outdoor place and the convenience on the user side is impossible to be improved.

### SUMMARY OF THE INVENTION

The invention solves the above-described problems under such circumstances. It is a concern of the invention to provide a broadcast receiver, a broadcast reception method, a digital TV broadcast receiver, an external terminal, a broadcast receiver control system and a storage medium, suitable for controlling various operations of the broadcast receiver from a remote site such as an outdoor place.

It is another concern of the invention to improve the operability of a digital TV broadcast receiver to be controlled from a remote site such as an outdoor place.

An embodiment of the invention provides a broadcast receiver comprising: receiving means for receiving a broadcast signal in response to a request from an external terminal capable of communicating with the broadcast receiver, the broadcast signal being transmitted by multiplexing identification information for identifying the broadcast receiver with control information for controlling the broadcast receiver; communication means for communicating with the external terminal; extraction means for extracting information data regarding information designated by the control information in accordance with the identification information and control information contained in the received broadcast signal; and control means for controlling to make the communication means transmit the information data regarding the information to the external terminal in response to reception of the control information.

Other features and advantages of the present invention will become apparent from the following description taken in conjunction with the accompanying drawings.

### BRIEF DESCRIPTION OF THE DRAWINGS

Fig. 1 is a block diagram showing an example of the structure of a digital TV broadcast receiver according to first to fourth embodiments of the invention.
Fig. 2 is a conceptual diagram showing an example of the structure of a system using a digital TV broadcast receiver and a remote terminal according to the first and second embodiments of the invention.
Figs. 3A and 3B are front views showing examples of the structures of an operation unit and a remote controller equipped to the digital TV broadcast receiver according to the first and second embodiments of the invention.
Fig. 4 is a flow chart illustrating a process of performing remote operation settings of the digital TV broadcast receiver to be executed by a user according to the first embodiment of the invention.
Fig. 5 is a flow chart illustrating a process of performing remote operation settings of the digital TV broadcast receiver to be executed by a user according to the first embodiment of the invention.
Figs. 6A, 6B, 6C, 6D, 6E and 6F are diagrams showing UI screens 1 to 6 to be displayed for a process of performing remote operation settings of the digital TV broadcast receiver to be executed by a user according to the first embodiment of the invention.
Fig. 7 is a diagram illustrating the operations and data transmission/reception sequences to be performed among a remote terminal, a service provider, a broadcast and a digital TV broadcast receiver according to the first embodiment of the invention.
Fig. 8 is a diagram illustrating the operations and data transmission/reception sequences to be performed among the remote terminal, service provider, broadcast and digital TV broadcast receiver according to the first embodiment of the invention.
Fig. 9 is a diagram illustrating the operations and data transmission/reception sequences to be performed among the remote terminal, service provider, broadcast and digital TV broadcast receiver according to the first embodiment of the invention.
Fig. 10 is a front view showing an example of the structure of a remote terminal according to the first embodiment of the invention.
Fig. 11 is a diagram illustrating an example of a setting screen for entering a terminal number and an ID number of a remote terminal according to the first embodiment of the invention.
Fig. 12 is a flow chart illustrating the operation of the digital TV broadcast receiver according to the first embodiment of the invention.
Fig. 13 is a flow chart illustrating the operation of the digital TV broadcast receiver according to the first embodiment of the invention.
Figs. 14A, 14B and 14C are diagrams illustrating an example of an initial screen to be structured, transmitted and displayed on a remote terminal by the digital TV broadcast receiver according to the first embodiment of the invention.
Fig. 15 is a flow chart illustrating a process of obtaining information necessary for creating the initial screen shown in Figs. 14A to 14C to be executed by a second UI screen structure unit of the digital TV broadcast receiver according to the first embodiment of the invention.
Fig. 16 is a flow chart illustrating a process of obtaining information necessary for creating the initial screen shown in Figs. 14A to 14C to be executed by the second UI screen structure unit of the digital TV broadcast receiver according to the first embodiment of the invention.
Figs. 17A and 17B are diagrams illustrating examples of a data screen to be structured, transmitted and displayed on a remote terminal by the digital TV broadcast receiver according to the first embodiment of the invention.
Fig. 18 is a flow chart illustrating a process of obtaining information necessary for creating the data screen shown in Figs. 17A and 17B to be executed by the second UI screen structure unit of the digital TV broadcast receiver according to the first embodiment of the invention.
Fig. 19 is a flow chart illustrating a process of obtaining information necessary for creating the data screen shown in Figs. 17A and 17B to be executed by the second UI screen structure unit of the digital TV broadcast receiver according to the first embodiment of the invention.
Fig. 20 is a flow chart illustrating a process of performing remote operation settings of the digital TV broadcast receiver to be executed by a user according to the first embodiment of the invention.
Fig. 21 is a flow chart illustrating a process of performing remote operation settings of the digital TV broadcast receiver to be executed by a user according to the first embodiment of the invention.
Fig. 22 is a diagram showing a UI screen 7 to be displayed for a user to perform remote operation settings of the digital TV broadcast receiver according to the first embodiment of the invention.
Fig. 23 is a flow chart illustrating the operation of the digital TV broadcast receiver according to the second embodiment of the invention.
Fig. 24 is a flow chart illustrating the operation of the digital TV broadcast receiver according to the second embodiment of the invention.
Fig. 25 is a diagram illustrating the operations and data transmission/reception sequences to be performed among a remote terminal, a service provider, a broadcast and a digital TV broadcast receiver according to the second embodiment of the invention.
Fig. 26 is a diagram illustrating the operations and data transmission/reception sequences to be performed among the remote terminal, service provider, a broadcast and digital TV broadcast receiver according to the second embodiment of the invention.
Fig. 27 is a diagram illustrating the operations and data transmission/reception sequences to be performed among the remote terminal, service provider, broadcast and a digital TV broadcast receiver according to the second embodiment of the invention.
Fig. 28 is a conceptual diagram showing an example of the structure of a system using a digital TV broadcast receiver and a remote terminal according to the third embodiment of the invention.
Fig. 29 is a diagram showing an example of the structure of contents of a storage medium storing programs and associated data to be executed and used by a remote operation assistance method according to the invention.
Fig. 30 is a conceptual diagram illustrating a process of supplying an apparatus such as a computer with the programs and associated data to be executed and used by the remote operation assistance method of this invention.
Fig. 31 is a block diagram showing an example of the structure of a conventional digital TV receiver.
Figs. 32A and 32B are front views showing examples of the structures of an operation unit and a remoter controller equipped with a conventional digital TV broadcast receiver.
Fig. 33 is a diagram showing an example of an EPG screen of a conventional digital TV broadcast receiver.

### DETAILED DESCRIPTION OF THE PREFERRED EMBODIMENTS

Embodiments of the invention will be described with reference to the accompanying drawings.

### First Embodiment

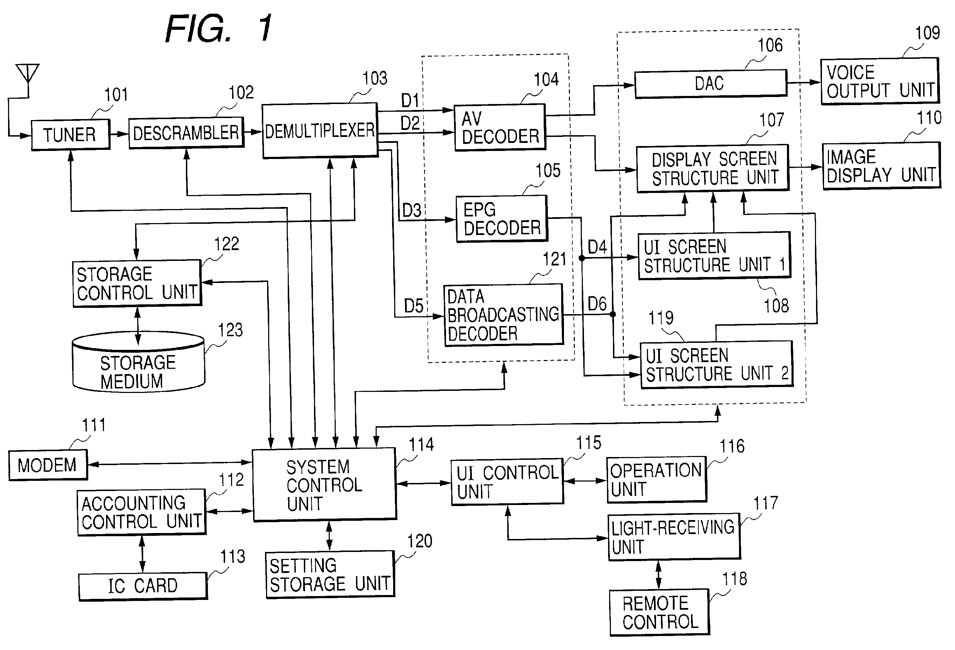

Fig. 1 is a block diagram showing an example of the structure of a digital TV broadcast receiver according to the first embodiment of the invention. The digital TV broadcast receiver of the first embodiment is constituted of a tuner 101, a descrambler 102, a demultiplexer 103, an AV decoder 104, an EPG decoder 105, a DAC 106, a display screen structure unit 107, a first UI screen structure unit 108, a voice output unit 109, an image display unit 110, a modem 111, an accounting control unit 112, an IC card 113, a system control unit 114, a UI control unit 115, an operation unit 116, a light receiving unit 117, a remote controller 118, a second UI screen structure unit 119, a setting storage unit 120, a data broadcast decoder 121, a storage control unit 122 and a storage unit 123.

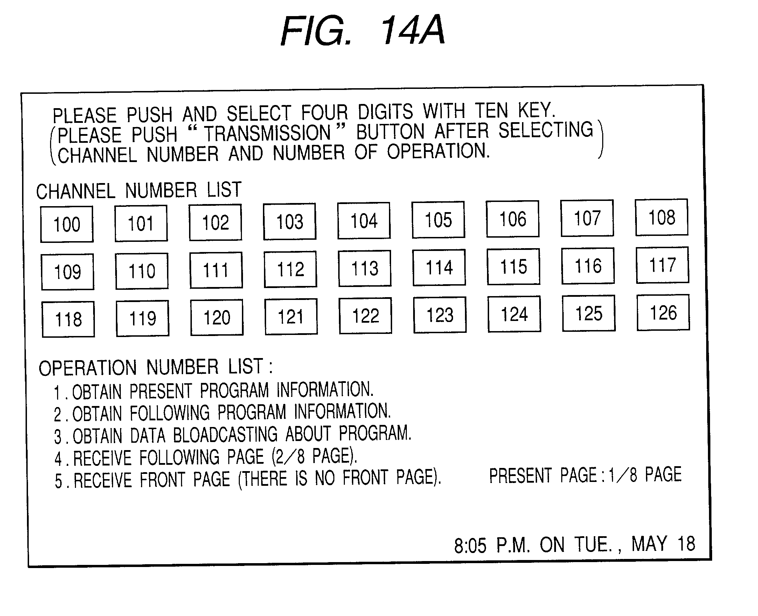

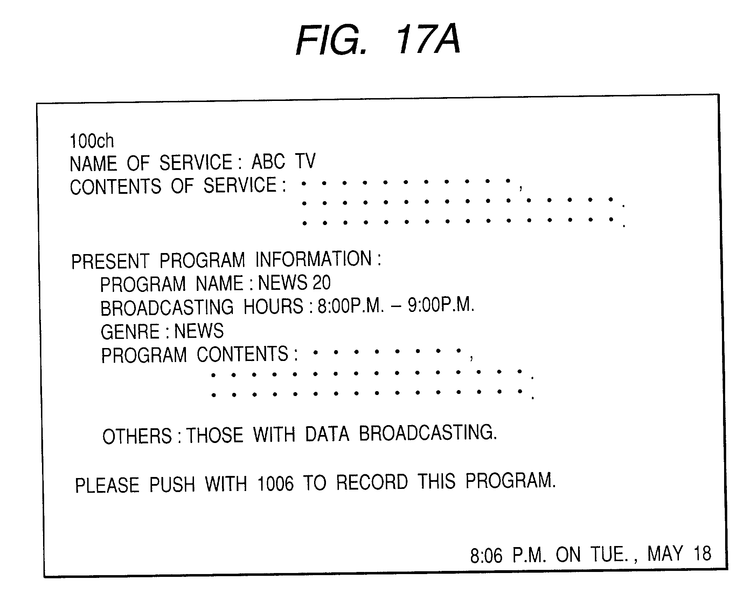

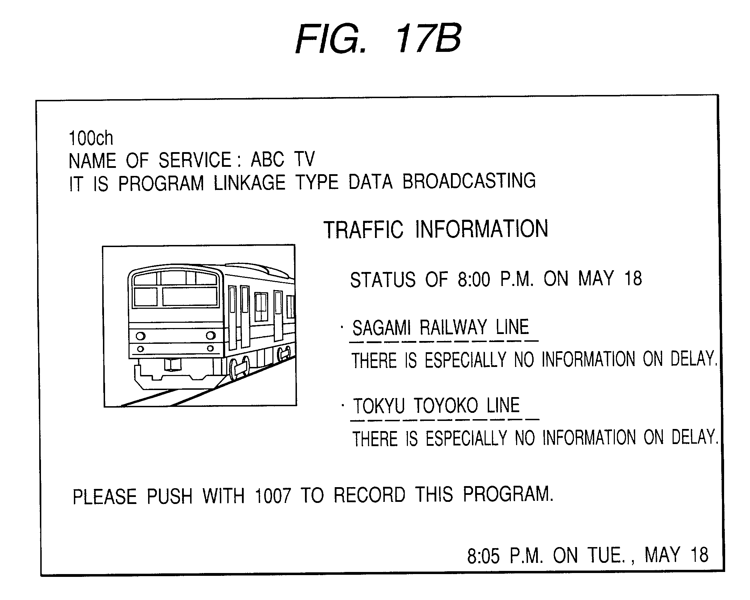

The structure of a main portion of the digital TV broadcast receiver will be described. The system control unit 114 executes various processes illustrated in the flow charts to be described later, in accordance with programs for executing a remote operation assistance method of the invention. The second UI screen structure unit 119 structures various screens such as shown in Figs. 14A to 14C and Figs. 17A and 17B. The setting storage unit 120 stores channel number information, page number information and genre setting information respectively to be described later. The data broadcast decoder 121 executes a decode process for data broadcast data. The storage control unit 122 makes the storage medium 123 store a desired channel program or data broadcast data. The structures of other components are similar to those described with reference to Fig. 31.

The fundamental operations of the digital TV broadcast receiver, such as receiving a signal via the tuner 101, generating TS data, displaying video data, and outputting audio data, are similar to conventional operations detailed with reference to Fig. 31, and so the description thereof is omitted. The first UI screen structure unit 108 has a function similar to that of the conventional UI screen structure unit 208. The minimum necessary constituents such as the tuner 101, demultiplexer 103 and setting storage unit 120 are always in operation in a standby state (always supplied with power).

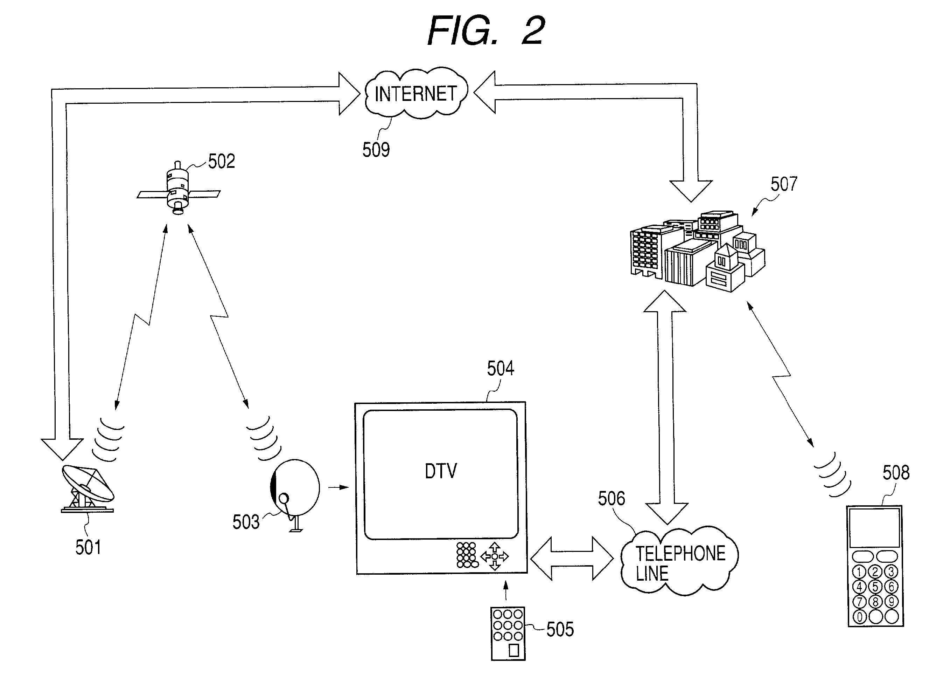

Fig. 2 is a conceptual diagram showing an example of the structure of a system using a digital TV broadcast receiver and a remote terminal according to the first embodiment of the invention. The system using the digital TV broadcast receiver and remote terminal of the first embodiment is constituted of a broadcaster (broadcasting industry company) 501, a digital TV broadcast satellite (hereinafter called a broadcast satellite) 502, a reception antenna 503, a digital TV broadcast receiver (hereinafter called a broadcast receiver) 504, a remote controller 505, a telephone network 506, a service provider 507, a remote operation terminal equipment (hereinafter called a remote terminal) 508, and the Internet 509.

The structure of a main portion of this system will be described. A TV program, EPG information and data broadcast data transmitted from the broadcaster 501 are received by the broadcast receiver 504 via the broadcast satellite 502 and reception antenna 503. The broadcast receiver 502 can communicate with the remote terminal 508 via the telephone network 506 and service provider 507. The service provider 507 can communicate with the broadcaster 501 via the Internet 509. Data transmission/reception among the broadcaster 501, broadcast receiver 504, service provider 507 and remote terminal 508 will be detailed in the following description of operations.

Constituent elements of the digital TV broadcast receiver (broadcast receiver) shown in Fig. 1 excepting the remote controller 118 correspond to the constituent element 504 shown in Fig. 2. The remote controller 118 shown in Fig. 1 corresponds to the remote controller 505 shown in Fig. 2. Next, remote operation settings of the digital TV broadcast receiver (broadcast receiver) 504 to be performed by a user of the broadcast receiver (receiver user) via the remote terminal 508 will be described with reference to the accompanying drawings.

Figs. 3A and 3B are front views showing examples of the structures of the operation unit 116 shown in Fig. 1 and remote controller 118 corresponding to the remote controller 505 shown in Fig. 2, according to the first embodiment. The operation unit 116 shown in Fig. 1 and remote controller 118 corresponding to the remote controller 505 shown in Fig. 2 according to the first embodiment each have a ten-key 601, an EPG display button 602, cursor buttons 603, a decision button 604 and a setting button 605.

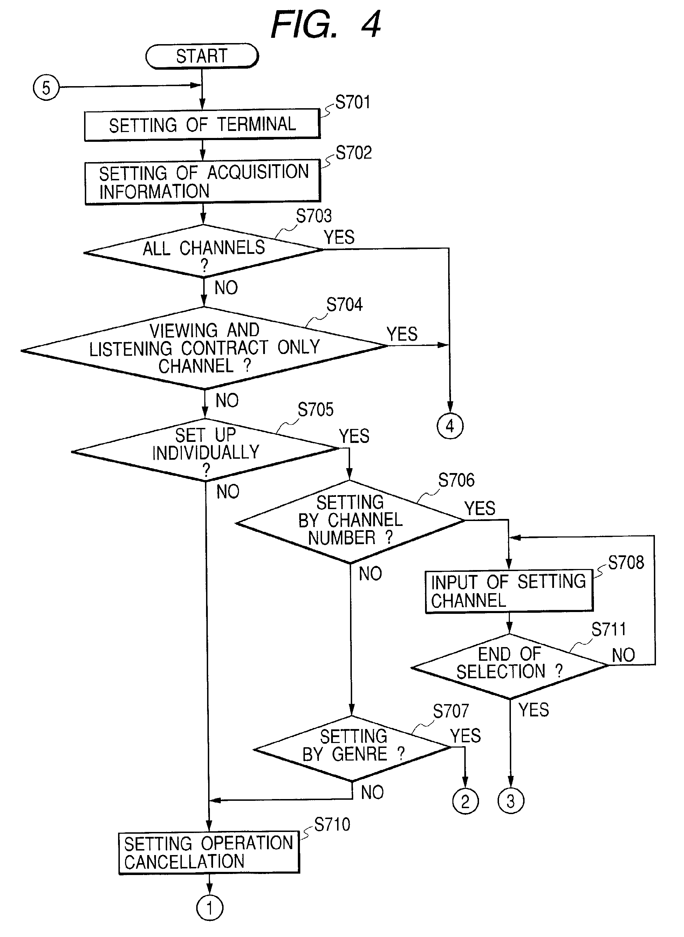

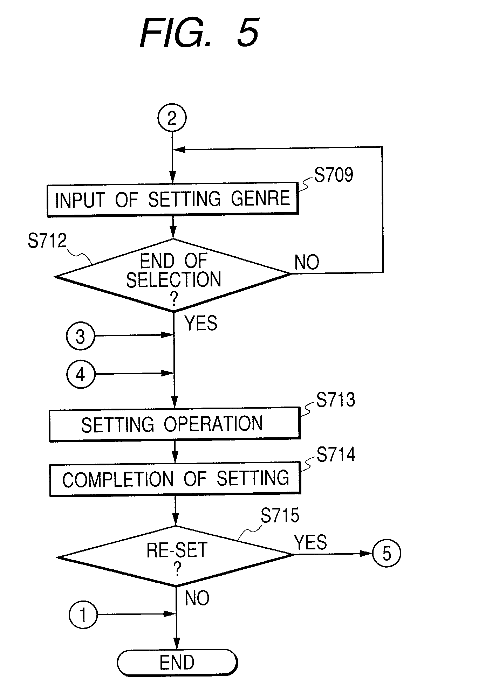

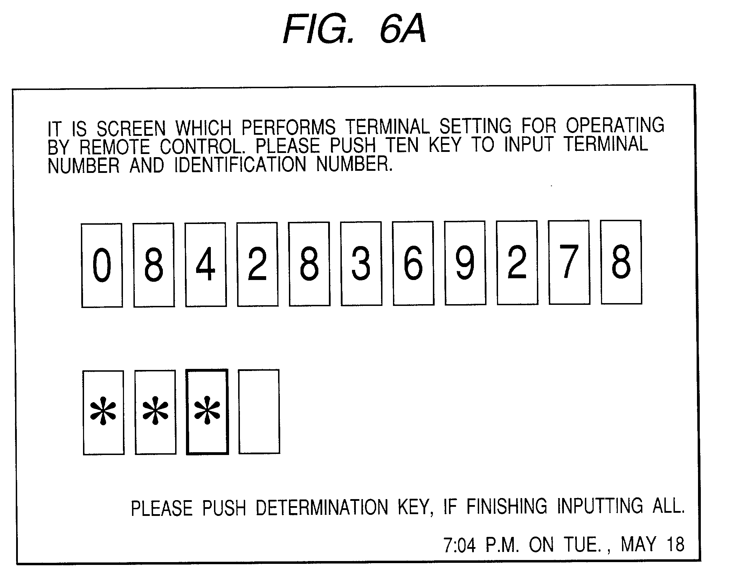

Figs. 4 and 5 are flow charts illustrating a process of performing remote operation settings of the broadcast receiver 504 to be executed by a receiver user according to the first embodiment. Figs. 6A to 6F show UI screens 1 to 6 to be displayed for remote operation settings of the broadcast receiver 504 by the receiver user.

At Step S701 shown in Fig. 4, a receiver user depresses the setting button 605 shown in Figs. 3A and 3B at any timing before, during or after viewing a TV program (it is assumed that the power of the broadcast receiver 504 was turned on and some screen is being displayed). Upon depression of the setting button 605, the UI screen 1 shown in Fig. 6A is displayed on the remote terminal 508 as the setting screen formed by the second UI screen structure unit 119 shown in Fig. 1.

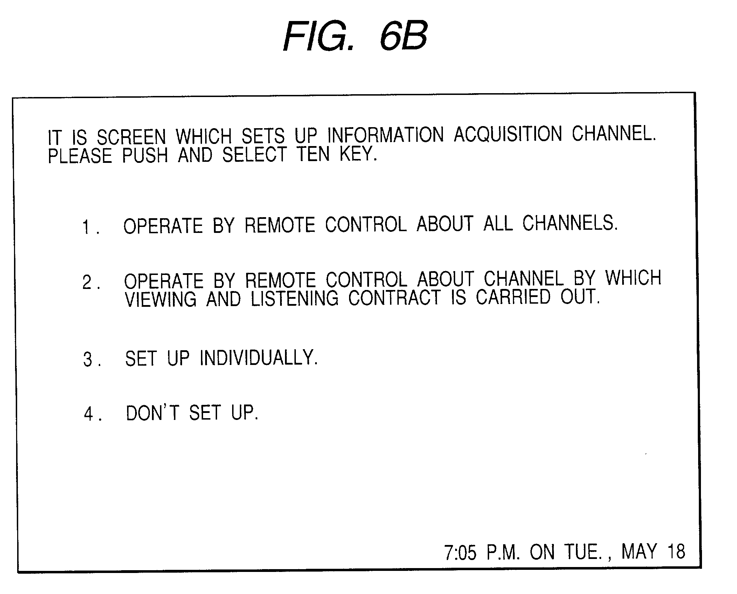

At Step S701 the receiver user enters the terminal number and ID number of the remote terminal 508 by using the ten-key 601 and decision button 604 shown in Figs. 3A and 3B, with reference to the displayed UI screen 1. The terminal number of the remote terminal 508 is an identification number unique to the remote terminal, such as a phone number and an email address. After the terminal number and ID number are entered, the decision button 604 is depressed, and the UI screen 2 shown in Fig. 6B and generated by the second UI screen structure unit 119 shown in Fig. 1 is displayed on the remote terminal 508.

At next Step S702 the receiver user selects a channel or the like necessary for performing remote operation by using the remote terminal 508, by referring to the displayed UI screen 2.

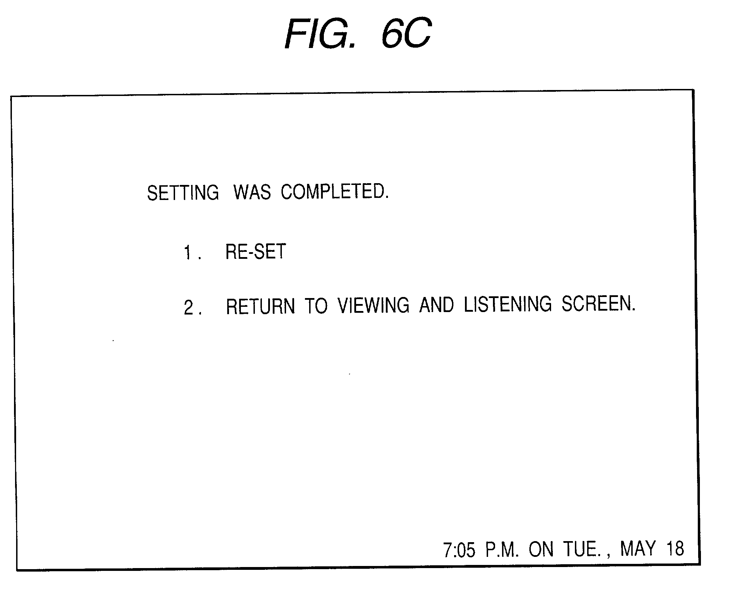

If it is judged at Step S703 that information of all channels of the broadcaster 501 shown in Fig. 2 is obtained, then the flow skips to Step S713 whereat the broadcast receiver 504 performs setting so that information of all channels can be obtained. At Step S714 a UI screen 3 shown in Fig. 6C and generated by the second UI screen structure unit 119 shown in Fig. 1 is displayed to notify the receiver user of a completion of setting.

If it is judged at Step S704 that the receiver user performs setting of obtaining information of only the channel contracted with the broadcaster 501 shown in Fig. 2, then the flow skips to Step S713 whereat the broadcast receiver 504 performs setting so that information of only the contracted channel can be obtained. At Step S714 the UI screen 3 shown in Fig. 6C and generated by the second UI screen structure unit 119 shown in Fig. 1 is displayed to notify the receiver user of a completion of setting.

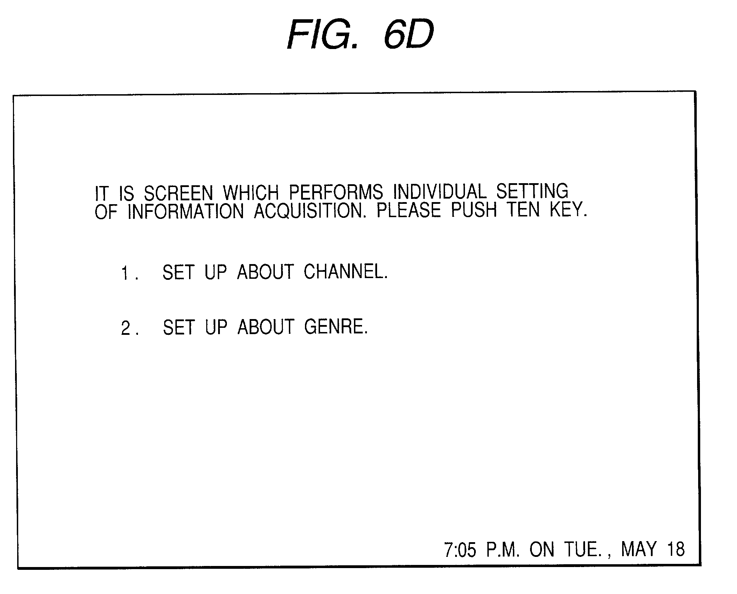

If it is judged at Step S705 that the receiver user performs individual setting and obtains the information of only the set channel and program genre, then a UI screen 4 shown in Fig. 6D and generated by the second screen structure unit 119 shown in Fig. 1 is displayed.

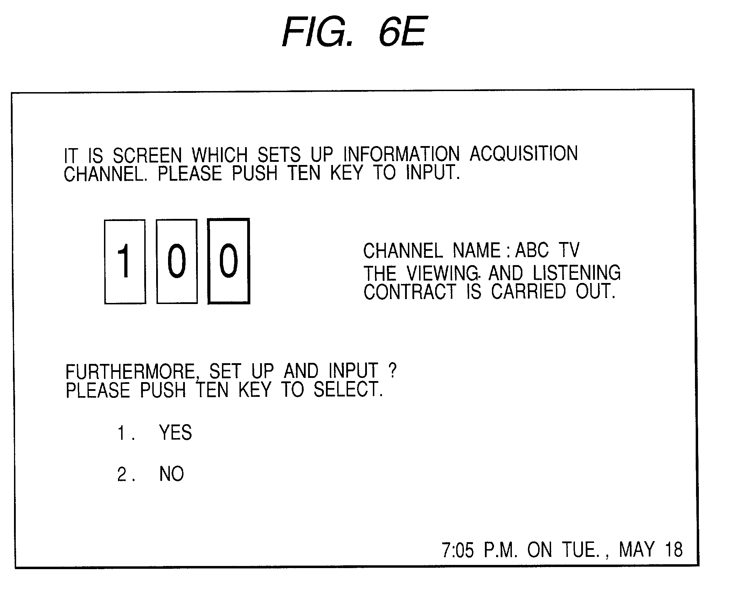

If it is judged at Step S706 that the receiver user selects a channel from all channels broadcast by the broadcaster 501 shown in Fig. 2 and obtains the information of the selected channel, then the flow skips to Step S708 whereat a UI screen 5 shown in Fig. 6E and generated by the second UI screen structure unit 119 shown in Fig. 1 is displayed as an individual setting screen for the channel number.

By referring to the displayed UI screen 5, the receiver user enters the channel number by using the ten-key 601 and decision button 604 shown in Figs. 3A and 3B. For example, after the channel number of three digits is entered, the decision button 604 is depressed to obtain the information of the channel having the channel number "100". Thereafter, the flow advances to Step S711 whereat if similar setting is to be performed for another channel, "1" is depressed by using the ten-key 601 shown in Figs. 3A and 3B, whereas if setting is not performed and a selection is to be terminated, "2" is depressed by using the ten-key 601 shown in Figs. 3A and 3B.

If "1" is depressed, the flow returns to Step S708 to enter a channel number, whereas if "2" is depressed, the flow advances to Step S713 whereat the broadcast receiver 504 performs setting so that information of the selected channel can be obtained. At Step S714, the UI screen 3 is displayed to notify the receiver user of a completion of setting.

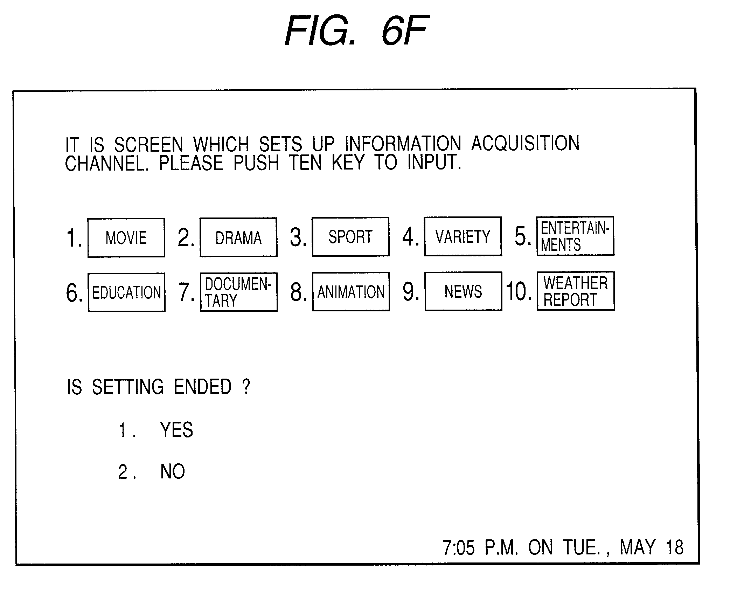

If it is judged at Step S707 that the receiver user selects the genre of each of all the programs broadcast by the broadcaster 501 shown in Fig. 2 and obtains the information of the program of the selected genre (i.e., if "2" is depressed by using the ten-key 601 shown in Figs. 3A and 3B while the UI screen 4 shown in Fig. 6D is displayed), then the flow advances to Step S709 whereat a UI screen 6 shown in Fig. 6F is displayed as the individual setting screen for a genre.

With reference to the displayed UI screen 6, the receiver user selects a genre by using the ten-key 601 and decision button 604 shown in Figs. 3A and 3B. For example, if "drama" is to be selected, it is temporarily selected by depressing "2" by using the ten-key 601, and then the decision key 604 is depressed to finally select the "drama". The UI screen 6 shown in Fig. 6F indicates that all of genres including "movie", "drama", "sport", "documentary" and "news" are selected. After all genres are selected, the flow advances to Step S712 whereat if it is judged that setting is completed, "1" is depressed by using the ten-key 601 shown in Figs. 3A and 3B, whereas if it is judged that setting is not completed but a genre is again selected, then "2" is depressed by using the ten-key 601 shown in Figs. 3A and 3B.

If "1" is depressed, the flow advances to Step S713 whereat the broadcast receiver 504 performs setting so that the information of the selected genre can be obtained. At Step S714 the UI screen 3 is displayed to notify the receiver user of a completion of setting.

If "2" is selected, the flow returns to Step S709 whereat a genre is selected again.

At Step S715 if "1" is depressed by using the ten-key 601 shown in Figs. 3A an 3B while the UI screen 3 shown in Fig. 6C is displayed, the flow returns to Step S701 whereat the selection operation setting is again performed. If "2" is depressed, the flow advances to Step S716 whereat all the setting operations are terminated and the program viewing screen or the like resumes.

The terminal number and ID number of the remote terminal 508, the channel, genre and the like necessary for remote operations set as above are stored in the setting storage unit 120 shown in Fig. 1.

Next, with reference to the accompanying drawings, description will be made for the case wherein a user of the remote terminal 508 shown in Fig. 2 communicates with the broadcast receiver 504 via the service provider 507 and broadcaster 501 to perform remote operations of the broadcast receiver 504.

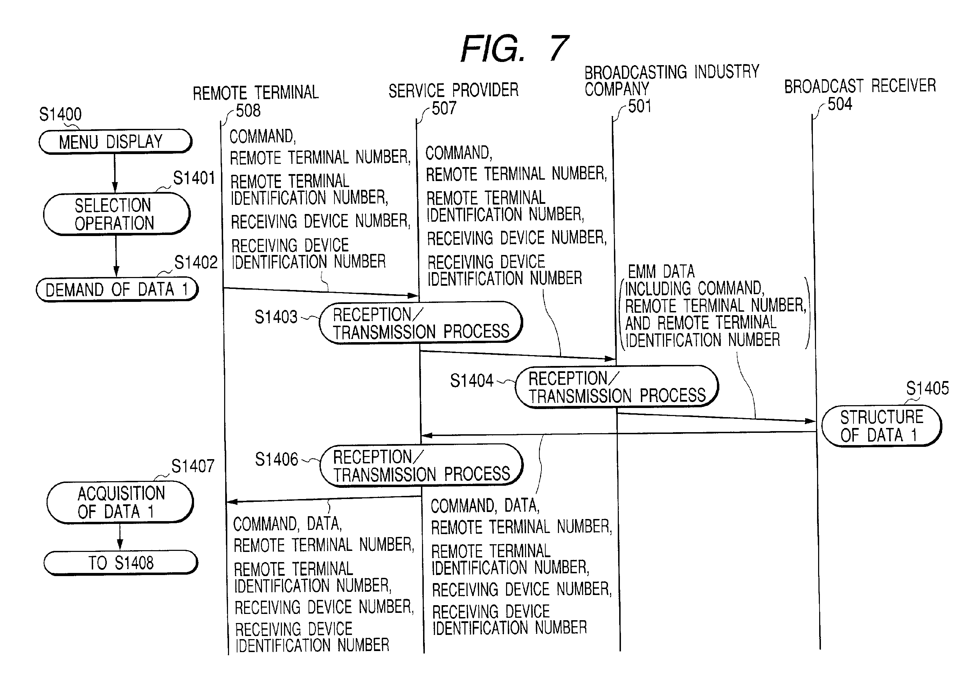

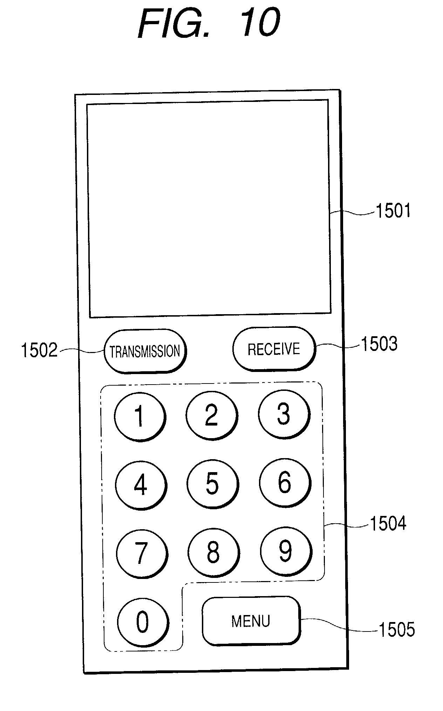

Figs. 7, 8 and 9 illustrate the operations and data transmission/reception sequences to be executed among the remote terminal 508, service provider 507, broadcaster 501 and broadcast receiver 504 respectively shown in Fig. 2 according to the first embodiment. Fig. 10 is a front view showing an example of the structure of the remote terminal 508 shown in Fig. 2 according to the first embodiment. The remote terminal 508 of the first embodiment has a display screen 1501, a transmission button 1502, a reception button 1503, a ten-key 1504 and a menu display button 1505.

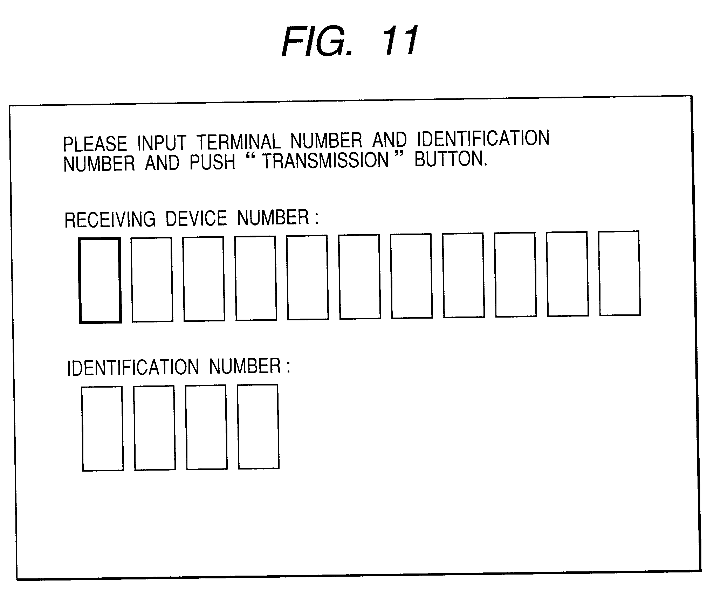

At Step S1400 shown in Fig. 7, as a user of the remote terminal 508 depresses the menu display button 1505 shown in Fig. 10, a menu such as shown in Fig. 11 is displayed on the display screen 1501.

At Step S1401 the user of the remote terminal 508 enters the receiver number and ID number of the broadcast receiver 504 by using the ten-key 1504 shown in Fig. 10. The receiver number of the broadcast receiver 504 is an identification number unique to the broadcast receiver. It is assumed that this identification number is an identification number given to the IC card 113 issued to the receiver user by the broadcaster 501. After both the numbers are input, the transmission button 502 is depressed to request data from the broadcast receiver (Step S1402). In this case, an initial screen request command for remote operations of the broadcast receiver 504, the terminal number and ID number of the remote terminal 508, and the terminal number and ID number of the broadcast receiver 504 are transmitted to the service provider 507.

At Step S1403 the service provider 507 confirms and checks the initial screen request command transmitted, the terminal number and ID number of the remote terminal 508, and the terminal number and ID number of the broadcast receiver 504 respectively received from the remote terminal 508. The service provider 507 transmits the initial screen request command, the terminal number and ID number of the remote terminal 508, and the terminal number and ID number of the broadcast receiver 504 to the broadcaster 501 via the Internet 509.

At Step S1404 the broadcaster 501 confirms and checks the initial screen request command, the terminal number and ID number of the remote terminal 508, and the terminal number and ID number of the broadcast receiver 504 received from the service provider 507. The broadcaster 501 creates an entitlement management message (EMM) and multiplexes it with TS data, and transmits the multiplexed TS data to the broadcast receiver 504 via the broadcast satellite 502.

The EMM data is private data with conditioned access which can be transmitted only to a broadcast receiver having a specific IC card number. In this embodiment, the payload of the EMM data contains the initial screen request command and the terminal number and ID number of the remote terminal 508. At Step S1405 the broadcast receiver 504 receives the EMM data transmitted from the broadcaster 501 via the broadcast satellite 502 and reception antenna 503.

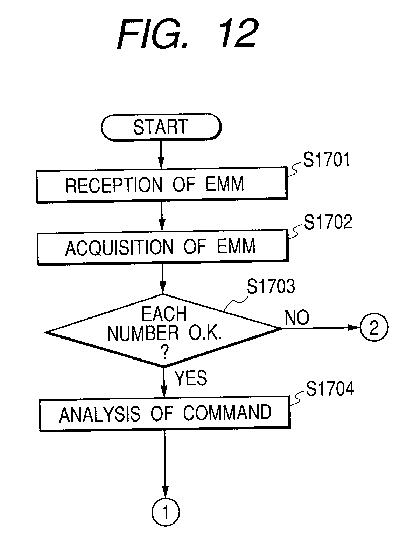

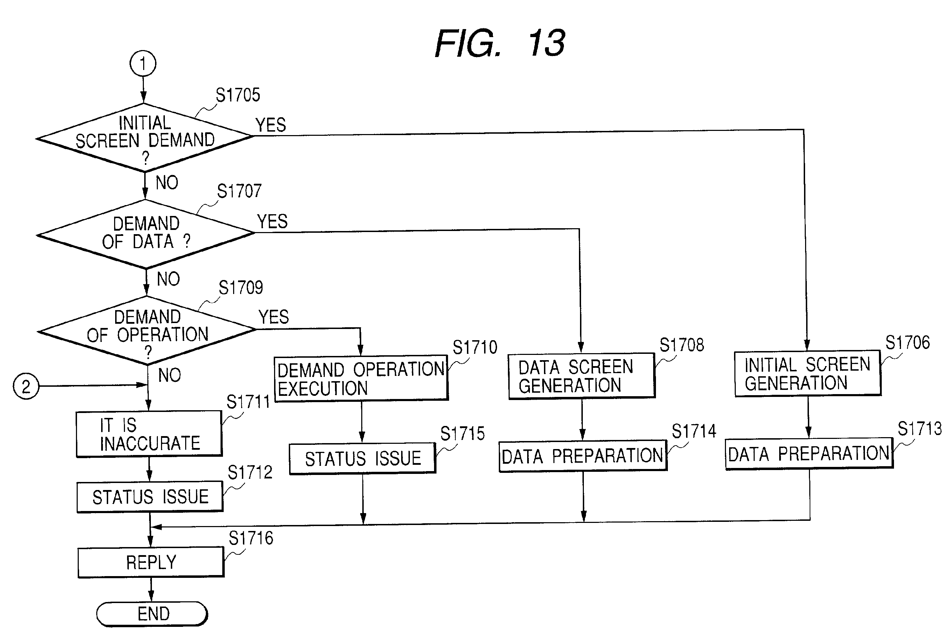

Next, with reference to Figs. 1, 12 and 13, description will be made for the operation after the broadcast receiver 504 receives the EMM data transmitted from the broadcaster 501 via the broadcast satellite 502 and reception antenna 503 at Step 1405 shown in Fig. 7. Figs. 12 and 13 are flow charts illustrating the operation of the broadcast receiver of the first embodiment.

At Step S1701 shown in Fig. 12, the broadcast receiver 504 receives EMM data. The system control unit 114 shown in Fig. 1 operates to obtain the EMM data via the tuner 101, descrambler 102 and demultiplexer 103 (Step S1702).

At Steps S1703 and S1704, the system control unit 114 analyzes the obtained EMM data. At Step S1703 the terminal number and ID number of the remote terminal contained in the EMM data are compared, for verification, with those entered on the screen shown in Fig. 6A. If the numbers are correct, the flow advances to Step S1704, whereas if they are not correct, the flow skips to Step S1711 whereat it is judged there is some illegal matter, and at Step S1712 a status indicating an illegal matter is issued.

At Step S1704, the received command is analyzed. Since the transmitted command is the initial screen request command, the flow advances from Step S1705 to Step S1706. At Step S1706 the second UI screen structure unit 119 shown in Fig. 1 generates a desired initial screen in accordance with the information set and stored in the setting storage unit 120 shown in Fig. 1 by referring to the UI screen 2 shown in Fig. 6B.

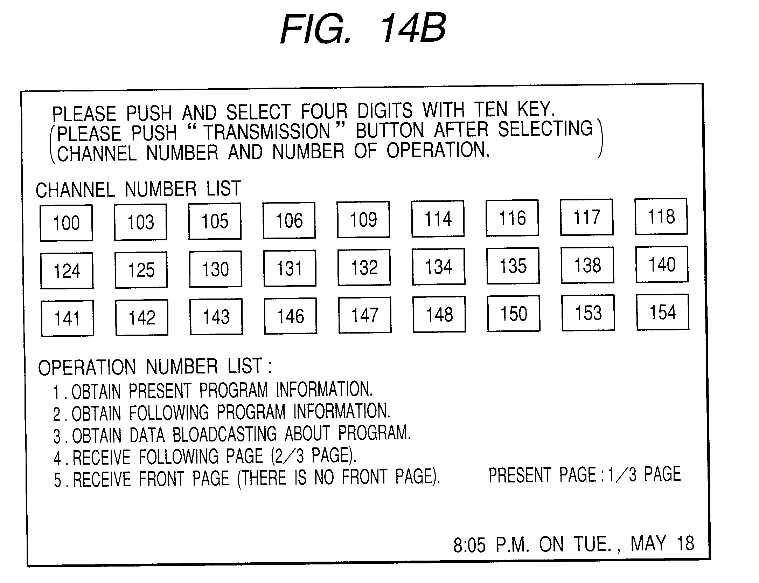

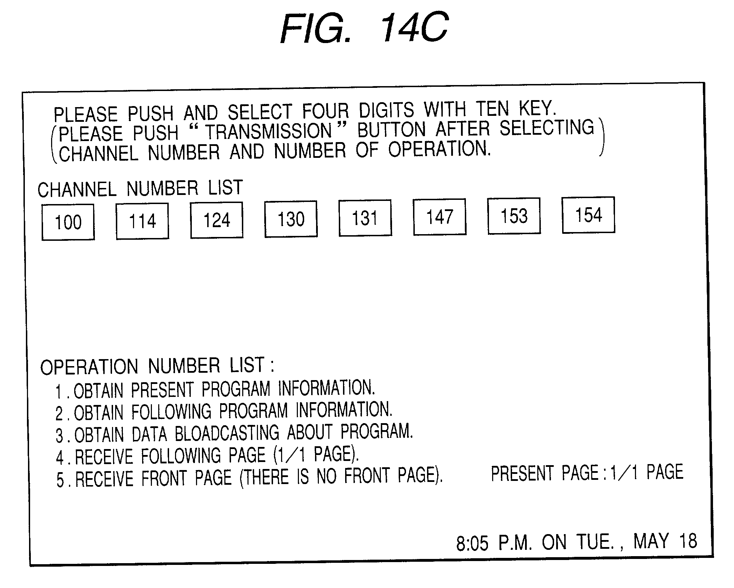

Fig. 14A is a diagram showing an example of the initial screen to be generated when "1. Remote operations for all channels (Operate by remote control about all channels)" is set on the UI screen 2. Fig. 14B is a diagram showing an example of the initial screen to be generated when "2. Remote operations for contracted channel (Operate by remote control about channel by which viewing and listening contract is carried out)" is set on the UI screen 2. Fig. 14C is a diagram showing an example of the initial screen to be generated when "3. Individual setting (Set up individually" is set on the UI screen 2.

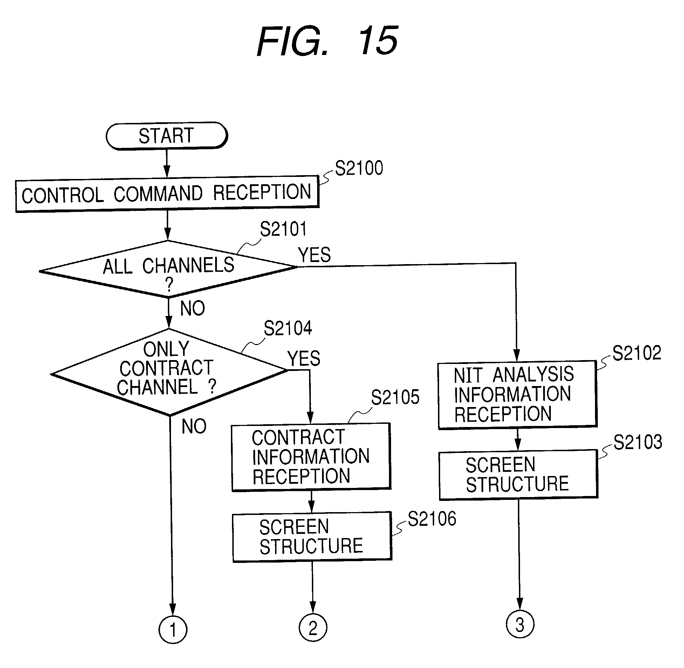

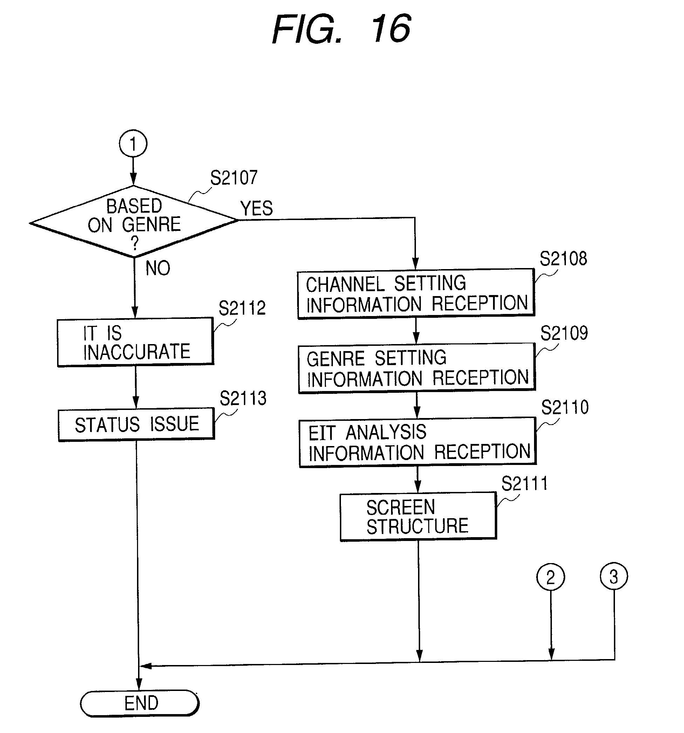

Next, with reference to Figs. 15 and 16, description will be made for the process of obtaining information necessary for generating the initial screens shown in Figs. 14A to 14C to be executed by the second UI screen structure unit 119 shown in Fig. 1. Figs. 15 and 16 are flow charts illustrating the process of obtaining information necessary for generating the initial screens shown in Figs. 14A to 14C to be executed by the second UI screen structure unit 119 shown in Fig. 1.

At Step S2100 shown in Fig. 15 the second UI structure unit 119 receives the analysis results of the EMM data by the system control unit 114 shown in Fig. 1 and a command of generating an initial screen to be issued in accordance with the information in the setting storage unit 120.

If it is judged at Step S2101 that the command is an initial screen generating command for all channels, then at Step S2102 the second UI screen structure unit 119 receives the analysis results of a service list descriptor of a network information table (NIT) in conformity with the "ARIB STD-B10: Program Array Information Used By Digital Broadcast" via the demultiplexer 103 and EPG decoder 105 shown in Fig. 1.

The NIT service list descriptor describes all channel numbers contained in a network and received by the broadcast receiver 504 from the broadcaster 501 shown in Fig. 2. The term "network" means a collection of MPEG2 transport streams to be transferred in one distribution system. Upon reception of the analysis information, the second UI screen structure unit 119 shown in Fig. 1 can grasp all channel numbers of programs broadcast by the broadcaster 501 shown in Fig. 2 and can obtain the channel numbers to be displayed in a channel number list shown in Fig. 14A.

At Step S2103 in accordance with the obtained information of all channel numbers, the initial screen shown in Fig. 14A is structured. When this screen is structured, the last displayed channel number and page number are stored in the setting storage unit 120 via the system control unit 114 shown in Fig. 1. It is assumed that the screen is structured by using bit map image information.

If it is judged at Step S2104 that the command is an initial screen generating command only for contracted channels, then at Step S2105 contracted channel number information is obtained via the IC card 113, accounting control unit 112 and system control unit 114 shown in Fig. 1. At Step S2106 the second UI screen structure unit 119 shown in Fig. 1 structures the initial screen shown in Fig. 14B in accordance with the obtained contracted channel number information. When the screen is structured, the last displayed channel number and page number are stored in the setting storage unit 120 via the system control unit 114 shown in Fig. 1. It is assumed that the screen is structured by using bit map image information.

If it is judged at Step S2107 that the command is an initial screen generating command for individually set information by the channel, program genre and the like, then at Step S2108 the second UI screen structure unit 119 obtains the channel setting information stored in the setting storage unit 120 via the system control unit 114 shown in Fig. 1. At Step S2109 the second UI screen structure unit 119 obtains the genre setting information stored in the setting storage unit 120 via the system control unit 114 shown in Fig. 1.

At Step S2110 the second UI screen structure unit 119 receives the analysis results of a content descriptor of an event information table (EIT) in conformity with the "ARIB STD-B10: Program Array Information Used By Digital Broadcast" via the demultiplexer 103 and EPG decoder 105 shown in Fig. 1.

The EIT content descriptor describes genre information of each TV program received by the broadcast receiver 504 from the broadcaster 501 shown in Fig. 2. Upon reception of the analysis information, the second UI screen structure unit 119 shown in Fig. 1 can grasp the channel number of the program broadcast by the broadcaster 501 shown in Fig. 2 and matching the genre set by the user. With the channel information and genre information, the channel numbers to be displayed in the channel number list shown in Fig. 14C can be obtained.

At Step S2111 the initial screen such as shown in Fig. 14C is structured by using the obtained channel number information. When the screen is structured, the last displayed channel number and page number are stored in the setting storage unit 120 via the system control unit 114 shown in Fig. 1. It is assumed that the screen is structured by using bit map image information.

If all of Steps S2101, S2104 and S2107 are negated by some obstruction, it is judged at Step S2112 as an illegal matter. At Step S2113 a status is issued for transmission of a notice of the illegal matter.

At Step S1716 the initial screen data structured as above at Step S1713 shown in Fig. 13 is transmitted via the system control unit 114 and modem 111 shown in Fig. 1 to the service provider 504 shown in Fig. 2, together with an initial screen transmission command, the terminal number and ID number of the remote terminal, and the receiver number and ID number of the broadcast receiver.

At Step S1406 shown in Fig. 7 the service provider 507 confirms and checks the initial screen transmission command, initial screen data, terminal number and ID number of the remote terminal, and receiver number and ID number of the broadcast receiver, respectively received from the broadcast receiver 504, and transmits them to the remote terminal 508.

At Step S1407 the remote controller 508 confirms and checks the initial screen transmission command, initial screen data, terminal number and ID number of the remote terminal, and receiver number and ID number of the broadcast receiver, respectively received from the service provider 507, outputs sounds to notify the user of the remote terminal of the data reception, and displays some message on the display screen 1501. As the user depresses the reception button 1503 shown in Fig. 10, the received initial screen is displayed on the display screen 1501. At Step S1408 the user of the remote terminal selects a desired request with reference to the initial screen displayed on the display screen 1501 of the remote terminal 508.

Description is directed to the initial screen shown in Fig. 14A and displayed on the display screen 1501 of the remote terminal 508. For example, if the user desires to "obtain present program information of Channel 100" among the channel numbers displayed in the channel number list, the user of the remote controller depresses four-digit numerals "1", "0", "0" and "1" by using the ten-key 1504 of the remote controller 118 shown in Fig. 10. The first three digits "1", "0" and "0" mean the channel number "100" and the last one digit "1" means "1. Obtain present program information" in the operation list shown in Fig. 14A. Similarly, if the user desires to "obtain data broadcast of present program at Channel 115", the user depresses four-digit numerals "1", "1", "5" and "3" by using the ten-key 1504. After this request is selected, at Step S1409 the user of the remote terminal depresses the transmission button 1502 shown in Fig. 10 to request data from the broadcast receiver 504. In this case, a data request command for remotely controlling the broadcast receiver 504, the terminal number and ID number of the remote terminal 508 and the receiver number and ID number of the broadcast receiver 504 are transmitted to the service provider 507. A reception/transmission process at Step S1410 to be executed by the service provider 507 and a reception/transmission process at Step S1411 to be executed by the broadcaster 501 are similar to those at Steps S1403 and S1404 already described, and so the description thereof is omitted.

At step S1412 the broadcast receiver 504 receives the EMM data transmitted from the broadcaster 501 via the broadcast satellite 502 and reception antenna 503.

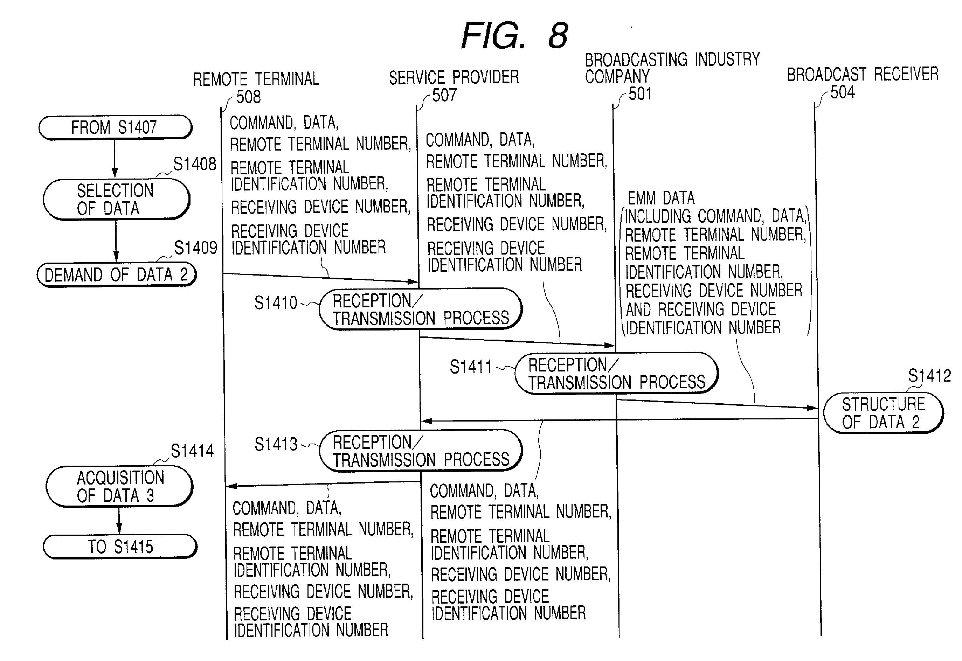

With reference to Figs. 1, 12 and 13, description will be made for the operation after the broadcast receiver 504 receives the EMM data transmitted from the broadcaster 501 via the broadcast satellite 502 and reception antenna 503 at Step S1412 shown in Fig. 8.

Steps S1701 to S1703 are similar to the description already made. At Step S1704 the broadcast receiver 504 analyzes the command. Since the transmitted command is a new data request command, the flow advances from Step S1707 to Step S1708.

At Step S1708 in accordance with the requested channel number and data, the second UI screen structure unit 119 of the broadcast receiver 504 show in Fig. 1 structures a predetermined data screen. Fig. 17A shows a data screen to be displayed when the remote terminal 508 requests to "obtain present program information of Channel 100". Fig. 17B shows a data screen to be displayed when the remote terminal 508 requests to "obtain data broadcast of Channel 100".

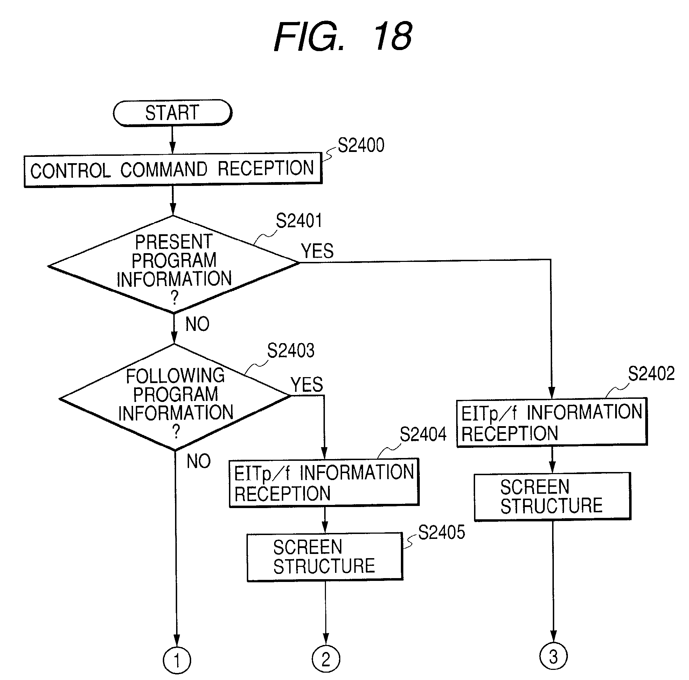

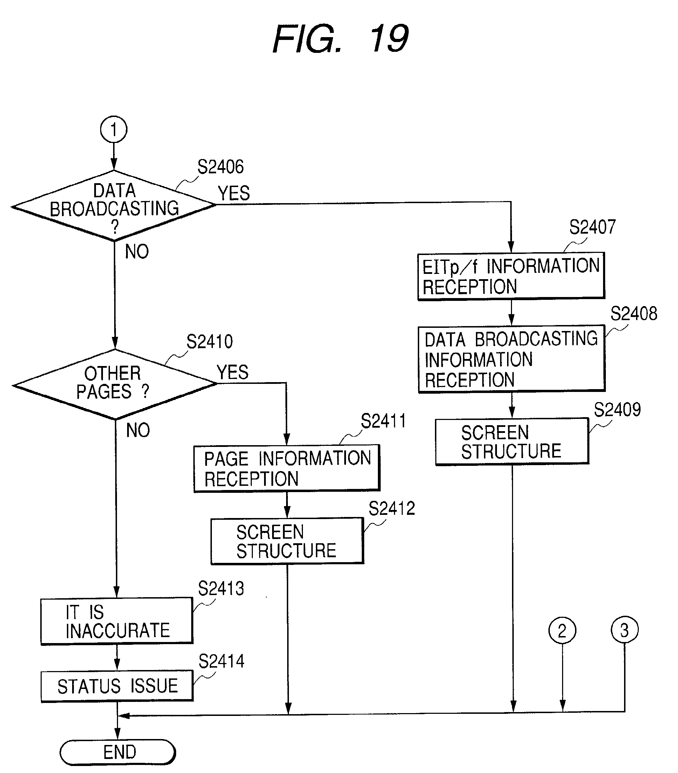

Next, with reference to Figs. 18 and 19, an information obtaining process for generation of a data screen will be described which is executed by the second UI screen structure unit 119 of the broadcast receiver 504 shown in Fig. 1. Figs. 18 and 19 are flow charts illustrating the information obtaining process for generation of data screens such as shown in Figs. 17A and 17B to be executed by the second UI screen structure unit 119 of the broadcast receiver 504 shown in Fig. 1.

At Step S2400 the second UI screen structure unit 119 receives the EMM data and analysis results by the system control unit 114 shown in Fig. 1 and a command for generating a data screen issued in accordance with the information stored in the setting storage unit 120.

If it is judged at Step S2401 that the command is a command for obtaining present program information and generating the screen data, at Step S2402 the second UI screen structure unit 119 receives via the demultiplexer 103 and EPG decoder 105 shown in Fig. 1 a present time in a time description table (TDT) (a table for transmitting the present time and being in conformity with the "ARIB STD-B10: Program Array Information Used By Digital Broadcast"), and analysis information of a short type event descriptor, a content descriptor, a hyper link descriptor and the like in an event information table (EIT) for the present and following programs (a table in conformity with the "ARIB STD-B10: Program Array Information Used By Digital Broadcast", Table_id=0x4E, 0x4F). The program presently broadcast is judged from the present time described in TDT and a broadcast start time described in EIT.

The short type descriptor of EIT describes names and contents of programs. The content descriptor describes genres and the like of programs. The hyper link descriptor describes link information to names and contents of other programs, and program related information (including data broadcast).

Upon reception of the analysis information, at Step S2402 the second UI screen structure unit 119 shown in Fig. 1 structures an information screen of the program presently broadcast such as shown in Fig. 17A. It is assumed that the screen is structured by using bit map image information.

If it is judged at Step S2403 that the command is a command for obtaining the following program information and generating screen data, at Step S2404 the second UI screen structure unit 119 receives via the demultiplexer 103 and EPG decoder 105 shown in Fig. 1 a present time in the time description table (TDT) (a table for transmitting the present time and being in conformity with the "ARIB STD-B10: Program Array Information Used By Digital Broadcast"), and analysis information of the short type event descriptor, content descriptor, hyper link descriptor and the like in the event information table (EIT) for the present and following programs (a table in conformity with the "ARIB STD-B10: Program Array Information Used By Digital Broadcast", Table_id=0x4E, 0x4F). The program to be broadcast next is judged from the present time described in TDT and a broadcast start time described in EIT.

The short type descriptor of EIT describes names and contents of programs. The content descriptor describes genres and the like of programs. The hyper link descriptor describes link information to names and contents of other programs, and program related information (including data broadcast).

Upon reception of the analysis information, at Step S2405 the second UI screen structure unit 119 shown in Fig. 1 structures an information screen of the program to be next broadcast, the information screen being similar to that shown in Fig. 17A. It is assumed that the screen is structured by using bit map image information.

If it is judged at Step S2406 that the command is a command for obtaining data broadcast data of the program and generating screen data, at Step S2407 the second UI screen structure unit 119 receives via the demultiplexer 103 and EPG decoder 105 shown in Fig. 1 analysis information of the hyper link descriptor in the event information table (EIT) for the present and following programs (a table in conformity with the "ARIB STD-B10: Program Array Information Used By Digital Broadcast", Table id=0x4E, 0x4F).

The hyper link descriptor describes link information to names and contents of other programs, and program related information (including data broadcast). Link information to the data broadcast data of the program is obtained from the information of the descriptor to request desired data broadcast data from the data broadcast decoder 121 via the system control unit 114 shown in Fig. 1.

At Step S2408 the second screen structure unit 119 shown in Fig. 1 obtains data broadcast information D6 via the demultiplxer 103 and data broadcast decoder 121. At Step S2409 the second UI screen structure unit 119 shown in Fig. 1 structures the data broadcast screen of the program such as shown in Fig. 17B. It is assumed that the screen is structured by using bit map image information.

If it is judged at Step S2410 that the command is a command for generating initial screen data of another page (following page or previous page shown in Figs. 14A to 14C), at Step S2411 the second UI screen structure unit 119 receives via the system control unit 114 information of the channel number and page number stored in the setting storage unit 120 shown in Fig. 1 and last displayed when the screen was structured. By using this data, the second UI screen structure unit 119 shown in Fig. 1 structures the initial screen of the other page. It is assumed that the screen is structured by using bit map image information.

If all of Steps S2401, S2403, S2406 and S2410 are negated by some obstruction, it is judged at Step S2413 as an illegal matter. At Step S2414 a status is issued for transmission of a notice of the illegal matter.

At Step S1716 the screen data structured as above at Step S1714 shown in Fig. 13 is transmitted via the system control unit 114 and modem 111 shown in Fig. 1 to the service provider 504 shown in Fig. 2, together with a screen data transmission command, the initial screen data, the terminal number and ID number of the remote terminal, and the receiver number and ID number of the broadcast receiver.

At Step S1413 shown in Fig. 8 the service provider 507 confirms and checks the screen data transmission command, initial screen data, terminal number and ID number of the remote terminal, and receiver number and ID number of the broadcast receiver, respectively received from the broadcast receiver 504, and transmits them to the remote terminal 508.

At Step S1414 the remote controller 508 confirms and checks the screen data transmission command, initial screen data, terminal number and ID number of the remote terminal, and receiver number and ID number of the broadcast receiver, respectively received from the service provider 507, outputs sounds to notify the user of the remote terminal of the data reception, and displays some message on the display screen 1501. As the user depresses the reception button 1503 shown in Fig. 10, the received screen data (such as shown in Fig. 17A) is displayed on the display screen 1501. At Step S1415 the user of the remote terminal selects a desired request with reference to the screen data displayed on the display screen 1501.

Description is directed to the screen shown in Fig. 17A and displayed on the remote terminal 508. As shown in Fig. 17A, if the user desires to "record a program presently broadcast at Channel 100", the user of the remote controller depresses four-digit numerals "1", "0", "0" and "6" by using the ten-key 1504 of the remote controller 118 shown in Fig. 10. The first three digits "1", "0" and "0" mean the channel number "100" and the last one digit "6" means recording the program. "1.

Also as shown in Fig. 17B, if the user desires to "record data broadcast of the program presently broadcast at Channel 110", the user of the remote controller depresses four-digit numerals "1", "1", "0" and "7" by using the ten-key 1504. The first three digits "1", "1" and "0" mean the channel number "110" and the last one digit "7" means recording the data broadcast.

After this request is selected, at Step S1416 the user of the remote terminal depresses the transmission button 1502 shown in Fig. 10 to request an operation from the broadcast receiver 504. In this case, an operation request command for remotely controlling the broadcast receiver 504, the terminal number and ID number of the remote terminal 508 and the receiver number and ID number of the broadcast receiver are transmitted to the service provider 507.

A reception/transmission process at Step S1417 to be executed by the service provider 507 and a reception/transmission process at Step S1418 to be executed by the broadcaster 501 are similar to those at Steps S1403 and S1404 or Steps S1410 and S1411 already described, and so the description thereof is omitted. At Step S1419 the broadcast receiver 504 receives the EMM data transmitted from the broadcaster 501 via the broadcast satellite and reception antenna 503.

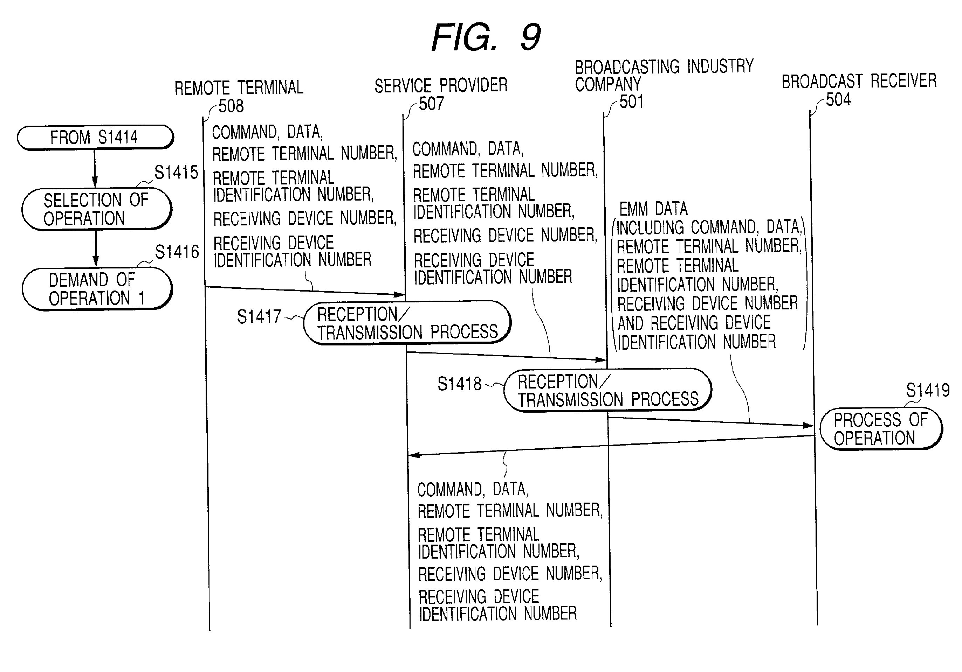

With reference to Figs. 1, 12 and 13, description will be made for the operation after the broadcast receiver 504 receives the EMM data transmitted from the broadcaster 501 via the broadcast satellite 502 and reception antenna 503 at Step S1419 shown in Fig. 9.

Steps S1701 to S1703 are similar to the description already made. At Step S1704 the broadcast receiver 504 analyzes the command. Since the transmitted command is an operation request command, the flow advances from Step S1709 to Step S1710. At Step S1710 in accordance with the requested channel number and data, a program or data broadcast data of a program in a desired channel is recorded and stored by using the demultiplexer 103, storage control unit 122 and storage medium 123.

For example, if the user requests to "record the present program at Channel 100", the system control unit 114 designates PID and the demultiplexer 103 sends a partial transport stream of the program corresponding to the requested channel number to the storage control unit 122. The partial transport stream contains video and audio data of the program, program clock reference (PCR) information, program association table (PAT) information, program map table (PMT) information and the like necessary for later data reproduction. The storage control unit 122 stores the received partial transport stream in the storage medium 123. At Step S1715 a status for execution of the operation (recording) is issued to the system control unit 114.

The status issued at Step S1715 is transmitted at Step S1716 via the modem 111 to the service provider 504 shown in Fig. 2, together with a status transmission command, the terminal number and ID number of the remote terminal and the receiver number and ID number of the broadcast receiver.

As described so far, according to the first embodiment, the digital TV broadcast receiver 504 capable of receiving data by utilizing a digital broadcast limited reception system which responds to a data acquisition request from a digital broadcast transmitter/receiver and in which a broadcaster broadcasts the request data by multiplexing the data with transport stream data, has: the tuner 101 for receiving digital broadcast data from the broadcaster and receiving control data multiplexed with transport stream data transmitted from the broadcaster in response to a control request from the remote controller 508; the demultiplexer 103 for deriving program data from the control data; the data broadcast decoder 121 for decoding the program data; the first UI screen structure unit 108 for generating user operation assistance screen data to assist the operation of a user of the digital TV broadcast receiver, in accordance with the decoded program data; the second UI screen structure unit 119 for generating a second user operation assistance screen data to assist a user of the remote controller, in accordance with the decoded program data; and the system control unit 114 for controlling to transmit the second user operation assistance screen data generated by the second UI screen structure unit via the modem 111 to the remote terminal 508. The embodiment provides the following functions and effects.

In the structure described above, the digital TV broadcast receiver 504 transmits the second user operation assistance screen data generated by the second UI screen structure unit, an ID number unique to the digital TV broadcast receiver 504 and the ID number unique to the remote controller 508, to the remote controller 508 having a function of communicating with the digital TV broadcast receiver 504, the ten-key 1504 for entering characters and symbols, and the display screen 1501 for displaying the second user operation assistance screen data generated by the second UI screen structure unit. The remote controller 508 displays the received user operation assistance screen data generated by the second UI screen structure unit on the display screen 1501. After the user of the remote terminal selects a desired operation, the remote terminal transmits data of the desired operation, the ID number unique to the digital TV broadcast receiver 504 and the ID number unique to the remote terminal 508, to the digital TV broadcast receiver 504 by using the communication function.

Upon reception of the data from the remote terminal 508 via the modem 111, the digital TV broadcast receiver 504 can operate in accordance with the data of the desired operation. It is therefore possible to control the digital TV broadcast receiver 504 from a remote site such as an outdoor place and the operability of the receiver can be improved considerably.

### Second Embodiment

Similar to the first embodiment, a digital TV broadcast receiver of the second embodiment is constituted of a tuner 101, a descrambler 102, a demultiplexer 103, an AV decoder 104, an EPG decoder 105, a DAC 106, a display screen structure unit 107, a first UI screen structure unit 108, a voice output unit 109, an image display unit 110, a modem 111, an accounting control unit 112, an IC card 113, a system control unit 114, a UI control unit 115, an operation unit 116, a light receiving unit 117, a remote controller 118, a second UI screen structure unit 119, a setting storage unit 120, a data broadcast decoder 121, a storage control unit 122 and a storage unit 123 (refer to Fig. 1).

Similar to the first embodiment, a system using a digital TV broadcast receiver and a remote terminal according to the second embodiment of the invention is constituted of a broadcaster (broadcasting industry company) 501, a digital TV broadcast satellite (hereinafter called a broadcast satellite) 502, a reception antenna 503, a digital TV broadcast receiver (hereinafter called a broadcast receiver) 504, a remote controller 505, a telephone network 506, a service provider 507, a remote operation terminal equipment (hereinafter called a remote terminal) 508, and the Internet 509 (refer to Fig. 2).

An operation unit corresponding to the operation unit 116 shown in Fig. 1 and a remote controller corresponding to the remote controller 505 shown in Fig. 2 according to the second embodiment each have a ten-key 601, an EPG display button 602, cursor buttons 603, a decision button 604 and a setting button 605 (refer to Figs. 3A and 3B).

Each constituent element shown in Figs. 1, 2, 3A and 3B of the second embodiment has been already detailed in the first embodiment, and so the description thereof is omitted.

In the second embodiment of the invention, information is automatically supplied to the remote terminal 508 at the time set in the broadcast receiver 504.

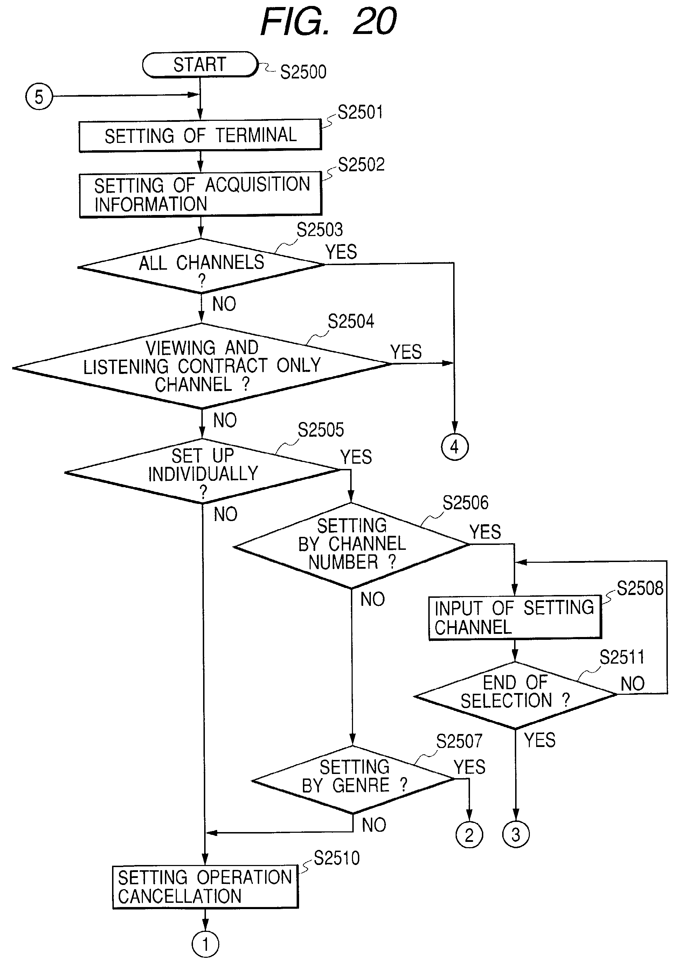

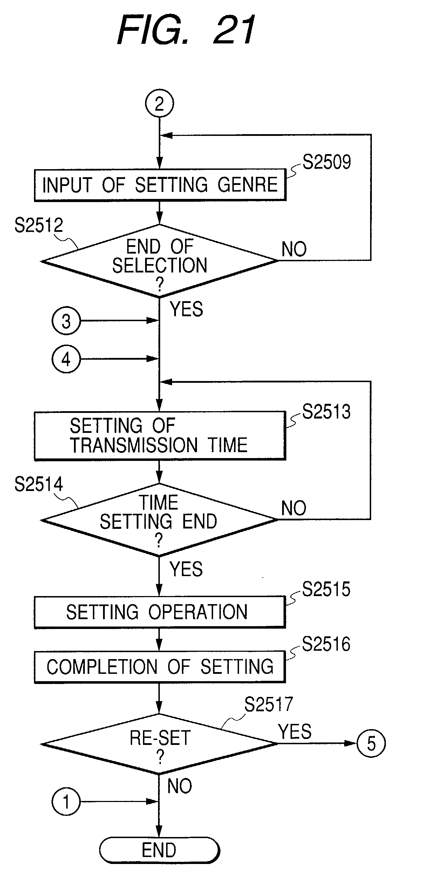

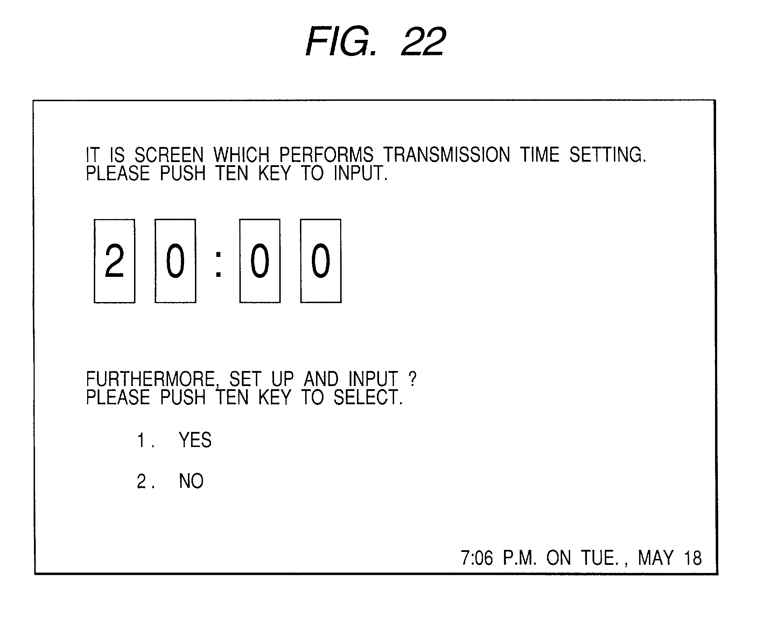

Figs. 20 and 21 are flow charts illustrating a process of performing remote operation settings of the broadcast receiver 508 by a receiver user according to the second embodiment. Fig. 22 is a diagram showing a UI screen 7 to be displayed for the process of performing remote operation settings of the broadcast receiver 508 by a receiver user.

At Step S2500 shown in Fig. 20, a receiver user depresses the setting button 605 shown in Figs. 3A and 3B at any timing before, during or after viewing a TV program (it is assumed that the power of the broadcast receiver 504 was turned on and some screen is being displayed). Upon depression of the setting button 605, the UI screen 1 shown in Fig. 6A is displayed on the remote terminal 508 as the setting screen formed by the second UI screen structure unit 119 shown in Fig. 1.

At Step S2501 the receiver user enters the terminal number and ID number of the remote terminal 508 by using the ten-key 601 and decision button 604 shown in Figs. 3A and 3B, with reference to the displayed UI screen 1. The terminal number of the remote terminal 508 is an identification number unique to the remote terminal, such as a phone number and an email address. After the terminal number and ID number are entered, the decision button 604 is depressed, and the UI screen 2 shown in Fig. 6B and generated by the second UI screen structure unit 119 shown in Fig. 1 is displayed on the remote terminal 508. At next Step S2502 the receiver user selects a channel or the like necessary for performing remote operation by using the remote terminal 508 and referring to the displayed UI screen 2 shown in Fig. 6B

If it is judged at Step S2503 that information of all channels of the broadcaster 501 shown in Fig. 2 is obtained, then the flow skips to Step S2513 whereat a UI screen 7 shown in Fig. 22 is displayed. With reference to the displayed UI screen 7, the receiver user enters the time when the broadcast receiver 504 automatically supplies information to the remote terminal 508 by using the ten-key 601 and decision button 604 shown in Figs. 3A and 3B. For example, four-digit numerals 20:00 are entered and the decision button 604 is depressed so that the broadcast receiver 504 automatically supplies information to the remote terminal 508 at that time.

It is judged at Step S2514 whether another time is set. If another time is to be set, "1" is entered from the ten-key 601 shown in Figs. 3A and 3B, whereas if another time is not set and the setting is terminated, "2" is entered from the ten-key shown in Figs. 3A and 3B.

If it is judged at Step S2504 that the receiver user performs setting of obtaining information of only the channel contracted with the broadcaster 501 shown in Fig. 2, then the flow skips to Step S2513 whereat the receiver user performs a time setting operation similar to that described above.

If it is judged at Step S2505 that the receiver user performs individual setting and obtains the information of only the set channel and program genre, then the UI screen 4 shown in Fig. 6D and generated by the second screen structure unit 119 shown in Fig. 1 is displayed.

If it is judged at Step S2506 that the receiver user selects a channel among the channels broadcast by the broadcaster 501 shown in Fig. 2 and obtains the information of the selected channel, then the flow skips to Step S2508 whereat the UI screen 5 shown in Fig. 6E and generated by the second UI screen structure unit 119 shown in Fig. 1 is displayed as an individual setting screen for the channel number.

By referring to the displayed UI screen 5, the receiver user enters the channel number by using the ten-key 601 and decision button 604 shown in Figs. 3A and 3B. For example, after the channel number of three digits is entered, the decision button 604 is depressed to obtain the information of the channel having the channel number "100". Thereafter, the flow advances to Step S2511 whereat if similar setting is to be performed for another channel, "1" is depressed by using the ten-key 601 shown in Figs. 3A and 3B, whereas if setting is not performed and a selection is to be terminated, "2" is depressed by using the ten-key 601 shown in Figs. 3A and 3B.

If "1" is depressed, the flow returns to Step S2508 to enter a channel number, whereas if "2" is depressed, the flow advances to Step S2513 whereat a similar time setting operation is performed.

If it is judged at Step S2507 that the receiver user selects the genre of each of all the programs broadcast by the broadcaster 501 shown in Fig. 2 and obtains the information of the program of the selected genre, then the flow advances to Step S2509 whereat a the UI screen 6 shown in Fig. 6F is displayed as the individual setting screen for a genre.

With reference to the displayed UI screen 6, the receiver user selects a genre by using the ten-key 601 and decision button 604 shown in Figs. 3A and 3B. For example, if "drama" is to be selected, it is temporarily selected by depressing "2" by using the ten-key 601, and then the decision key 604 is depressed to finally select the "drama". This operation is performed for all the genres to be selected. The UI screen 6 shown in Fig. 6F indicates that all of genres including "movie", "drama", "sport", "documentary" and "news" are selected. After all genres are selected, the flow advances to Step S2512 whereat if it is judged that setting is completed, "1" is depressed by using the ten-key 601 shown in Figs. 3A and 3B, whereas if it is judged that setting is not completed but a genre is again selected, then "2" is depressed by using the ten-key 601 shown in Figs. 3A and 3B.

If "1" is depressed, the flow returns to Step S2509 to perform a setting operation, whereas if "2" is depressed, the flow advances to Step S2513 whereat a time setting operation is performed.

At Step S2515 the setting operation is performed, and at Step S2516 the UI screen 3 is displayed to notify the receiver user of a completion of setting.

If "1" is depressed at Step S2517 by using the ten-key 601 shown in Figs. 3A and 3B while the UI screen is displayed, the flow returns to Step S2501 whereat the selection operation can be performed again. If "2" is depressed, the flow advances to Step S2518 whereat all the selection operations are terminated to resume a program viewing screen or the like.

The terminal number and ID number of the remote terminal, the channel, genre and the like necessary for remote operations set as above are stored in the setting storage unit 120 shown in Fig. 1.

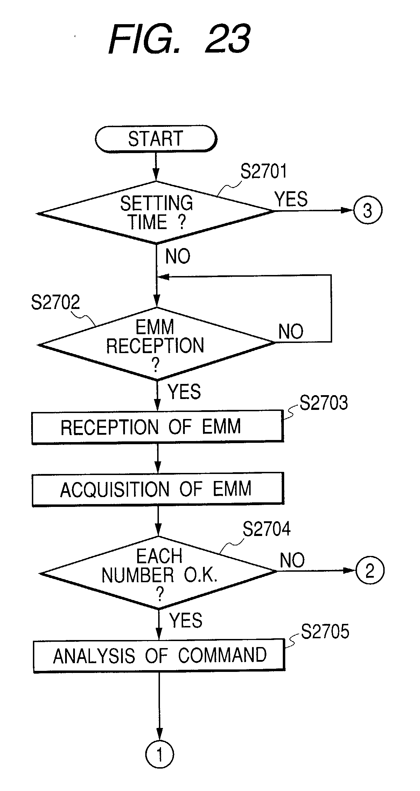

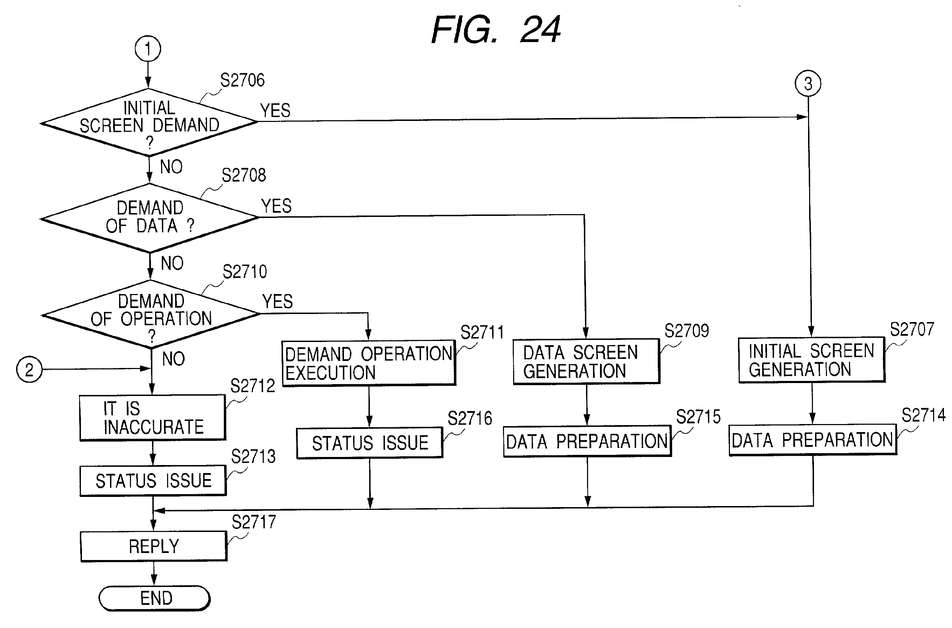

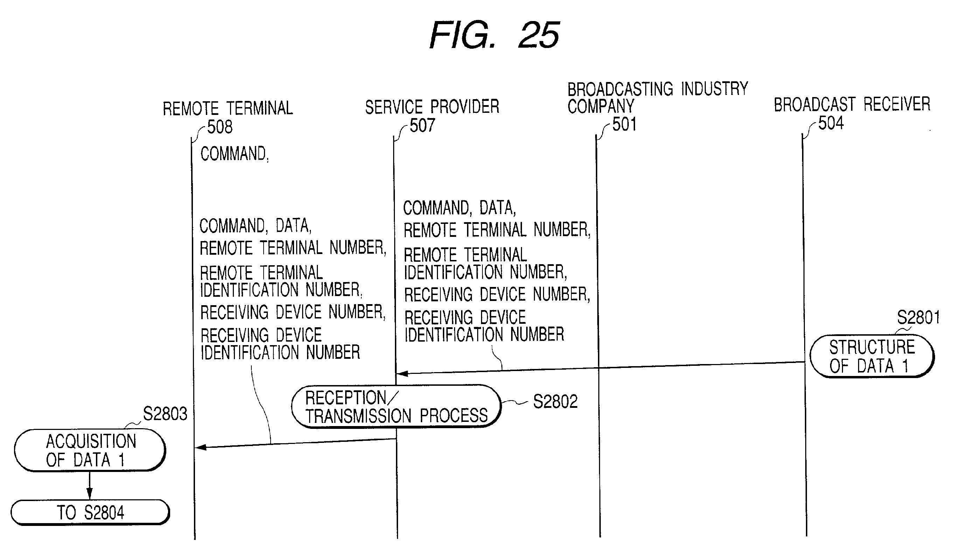

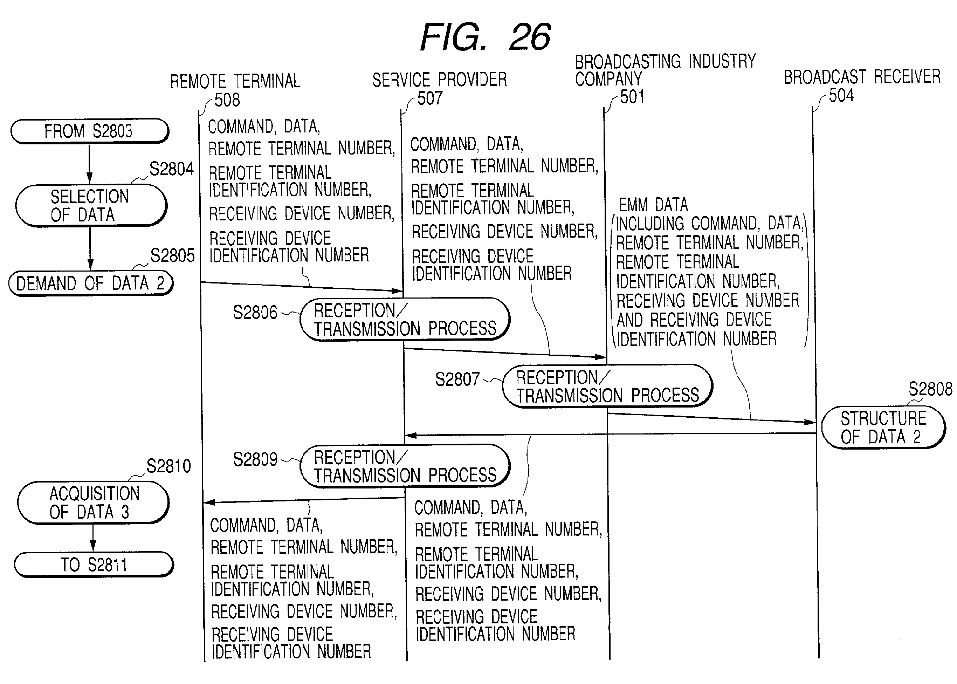

Next, with reference to the accompanying drawings, description will be made for the case wherein a user of the remote terminal 508 shown in Fig. 2 communicates with the broadcast receiver 504 via the service provider 507 and broadcaster 501 to perform remote operations of the broadcast receiver 504. Figs. 23 and 24 are flow charts illustrating the process of generating data to be sent from the broadcast receiver 504 to the remote terminal 508 shown in Fig. 2 according to the second embodiment. Figs. 25 and 26 illustrate the operations and data transmission/reception sequences to be executed among the remote terminal 508, service provider 507, broadcaster 501 and broadcast receiver 504 respectively shown in Fig. 2 according to the second embodiment.

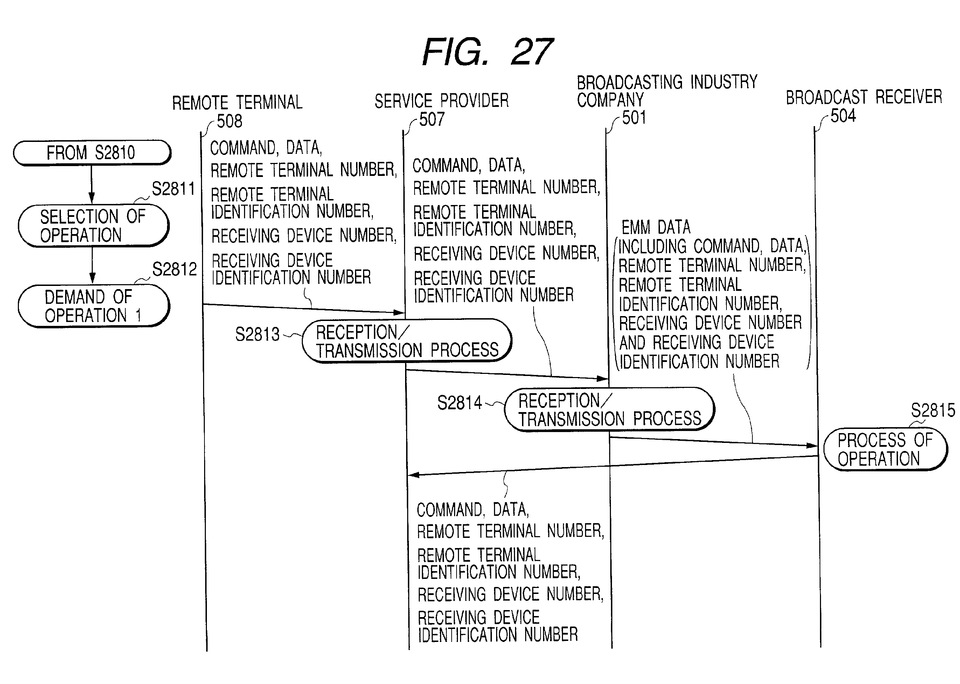

At Step S2701 shown in Fig. 23, the system control unit 114 shown in Fig. 1 receives time information in TDT via the demultiplexer 103 and EPG decoder 105 shown in Fig. 1 to monitor the time set as above when information is automatically supplied to the remote terminal 508. At the set time, at Step S2707 and following Steps, operations similar to those at Step S1706 and following Steps shown in Fig. 13 are performed in accordance with the operations and data transmission/reception sequences shown in Figs. 25 to 27.

As described so far, according to the second embodiment, the digital TV broadcast receiver 504 capable of receiving data by utilizing a digital broadcast limited reception system which responds to a data acquisition request from a digital broadcast transmitter/receiver and in which a broadcaster broadcasts the request data by multiplexing the data with transport stream data, has: the tuner 101 for receiving digital broadcast data from the broadcaster and receiving control data multiplexed with transport stream data transmitted from the broadcaster in response to a control request from the remote controller 508; the demultiplexer 103 for deriving program data from the control data; the data broadcast decoder 121 for decoding the program data; the first UI screen structure unit 108 for generating first user operation assistance screen data to assist the operation of a user of the digital TV broadcast receiver, in accordance with the decoded program data; the second UI screen structure unit 119 for generating a second user operation assistance screen data to assist a user of the remote controller, in accordance with the decoded program data; and the system control unit 114 for controlling to transmit the second user operation assistance screen data generated by the second UI screen structure unit via the modem 111 to the remote terminal 508 and to automatically supply information to the remote terminal 508 at the time set by the user. The embodiment provides the following functions and effects.

In the structure described above, the digital TV broadcast receiver 504 transmits the second user operation assistance screen data generated by the second UI screen structure unit, an ID number unique to the digital TV broadcast receiver 504 and the ID number unique to the remote controller 508, to the remote controller 508 having a function of communicating with the digital TV broadcast receiver 504, the ten-key 1504 for entering characters and symbols, and the display screen 1501 for displaying the second user operation assistance screen data generated by the second UI screen structure unit. The digital TV broadcast receiver 504 automatically transmits information to the remote terminal 508 at the time set by the user.

The remote controller 508 displays the received second user operation assistance screen data generated by the second UI screen structure unit on the display screen 1501. After the user of the remote terminal selects a desired operation, the remote terminal 508 transmits data of the desired operation, the ID number unique to the digital TV broadcast receiver 504 and the ID number unique to the remote terminal 508, to the digital TV broadcast receiver 504 by using the communication function.

Upon reception of the data from the remote terminal 508 via the modem 111, the digital TV broadcast receiver 504 can operate in accordance with the data of the desired operation. It is therefore possible to control the digital TV broadcast receiver 504 from a remote site such as an outdoor place and the operability of the receiver can be improved considerably.

### Third Embodiment

Similar to the first embodiment, a digital TV broadcast receiver of the third embodiment is constituted of a tuner 101, a descrambler 102, a demultiplexer 103, an AV decoder 104, an EPG decoder 105, a DAC 106, a display screen structure unit 107, a first UI screen structure unit 108, a voice output unit 109, an image display unit 110, a modem 111, an accounting control unit 112, an IC card 113, a system control unit 114, a UI control unit 115, an operation unit 116, a light receiving unit 117, a remote controller 118, a second UI screen structure unit 119, a setting storage unit 120, a data broadcast decoder 121, a storage control unit 122 and a storage unit 123 (refer to Fig. 1).

Each constituent element shown in Fig. 1 and other Figures of the third embodiment has been already detailed in the first embodiment, and so the description thereof is omitted.

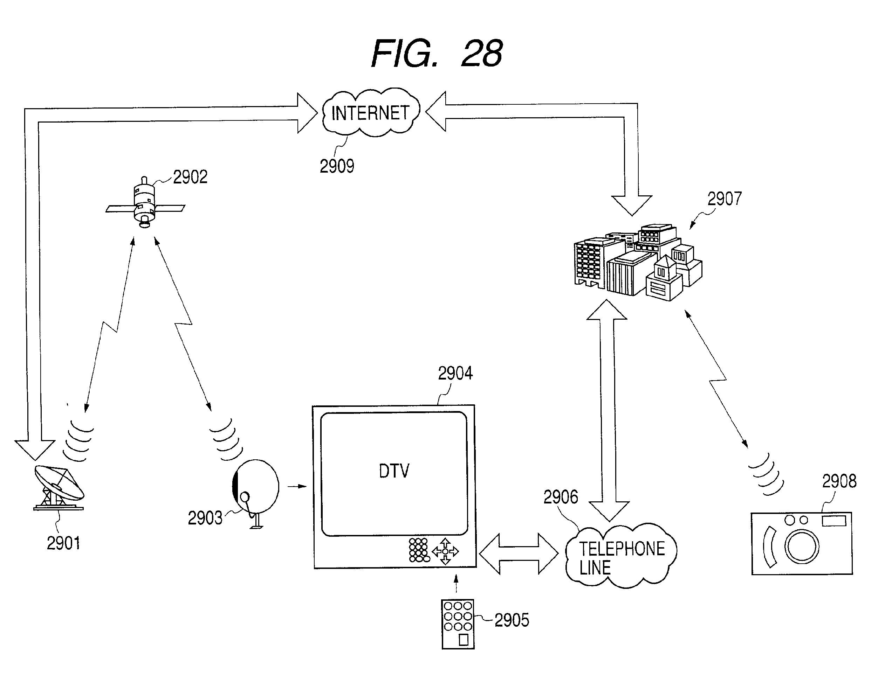

As shown in Fig. 28, a system using a digital TV broadcast receiver and a remote operation terminal according to the third embodiment of the invention is constituted of a broadcaster (broadcasting industry company) 2901, a digital TV broadcast satellite (hereinafter called a broadcast satellite) 2902, a reception antenna 2903, a digital TV broadcast receiver (hereinafter called a broadcast receiver) 2904, a remote controller 2905, a telephone network 2906, a service provider 2907, a remote operation terminal equipment (hereinafter called a remote terminal) 2908, and the Internet 2909.

In the third embodiment, user operation assistance screen data assisting the user to operate the remote terminal 2908 and generated by the second UI screen structure unit 119 is encoded into JPEG (Joint Photographic Expert Group) which is transmitted to the remote terminal 2908 with a digital camera function to use a JPEG decoding function thereof.

As described so far, according the third embodiment of the invention, it is possible to reduce the screen data amount to be transferred among the broadcast receiver 2904, broadcaster 2901, service provider 2907 and remote terminal 2908 with the digital camera function, more than the bit map image data transfer. Efficient data transfer and good display performance can therefore be realized.

### Fourth Embodiment

Similar to the first embodiment, a digital TV broadcast receiver of the fourth embodiment is constituted of a tuner 101, a descrambler 102, a demultiplexer 103, an AV decoder 104, an EPG decoder 105, a DAC 106, a display screen structure unit 107, a first UI screen structure unit 108, a voice output unit 109, an image display unit 110, a modem 111, an accounting control unit 112, an IC card 113, a system control unit 114, a UI control unit 115, an operation unit 116, a light receiving unit 117, a remote controller 118, a second UI screen structure unit 119, a setting storage unit 120, a data broadcast decoder 121, a storage control unit 122 and a storage unit 123 (refer to Fig. 1).

Each constituent element shown in Fig. 1 and other Figures of the fourth embodiment has been already detailed in the first embodiment, and so the description thereof is omitted.

In the fourth embodiment, user operation assistance screen data assisting the user to operate the remote terminal 2908 described with the first to third embodiments and generated by the second UI screen structure unit 119 is encoded into data described in an HTML (HyperText Markup Language) format or an XML (eXtensible Markup Language) format for transmission thereof.

As described so far, according to the fourth embodiment of the invention, user operation assistance screen data assisting the user to operate the remote terminal and generated by the second UI screen structure unit 119 is encoded into data described in an HTML format or an XML format for transmission thereof. It is therefore possible to reduce the data amount to be transferred among the broadcast receiver, broadcaster, service provider, and remote terminal, more than the bit map image data transfer or JPEG image data transfer. Efficient data transfer and good display performance can therefore be realized.

### Other Embodiments

In the above embodiments, the systems such as shown in Figs. 1 and 28 have been used by way of example. The invention is not limited only thereto. For example, an image forming apparatus such as a printer may be connected to the digital TV broadcast receiver. In this case, images displayed on the image display unit 110 of the digital TV broadcast receiver and on the display screen of the remote terminal can be printed out at the image forming apparatus such as a printer.

In the above embodiments, the remote controller having the structure shown in Fig. 10 has been used by way of example. The invention is not limited only thereto. For example, the function of the remote terminal of the invention may be installed in an already existing portable apparatus such as a portable information terminal and a portable phone to remotely control the digital TV broadcast receiver by the already existing portable apparatus such as a portable information terminal and a portable phone.

The invention is also applicable to a system having a plurality of apparatuses or to a single apparatus. The scope of the invention contains also the case wherein a medium such as a storage medium storing software program codes realizing the function of each embodiment described above is supplied to a computer (CPU or MPU) of the apparatus or system, and the computer reads and executes the program codes from the medium such as a storage medium.

In this case, the software program codes themselves read from the medium such as a storage medium realize the embodiment function. Therefore, the medium such as a storage medium storing the program codes constitutes the present invention. The medium such as a storage medium storing the program codes may be a floppy disk, a hard disk, an optical disk, a magneto optical disk, a CD-ROM, a CD-R, a magnetic tape, a nonvolatile memory card, a ROM or the like. The program codes may be downloaded from a network.

It is obvious that the scope of the invention includes the case wherein not only the computer executes the read program codes to realize the embodiment function but also an OS (operating system) running on the computer performs a portion or the whole of actual processes in accordance with the program codes to realize the embodiment function.

It is obvious that the scope of the invention also includes the case wherein the functions of each embodiment can be realized by writing the program codes read from the medium such as a storage medium into a memory of a function expansion board inserted into a computer or of a function expansion unit connected to the computer, and thereafter by executing a portion or the whole of actual processes by a CPU of the function expansion board or function expansion unit.

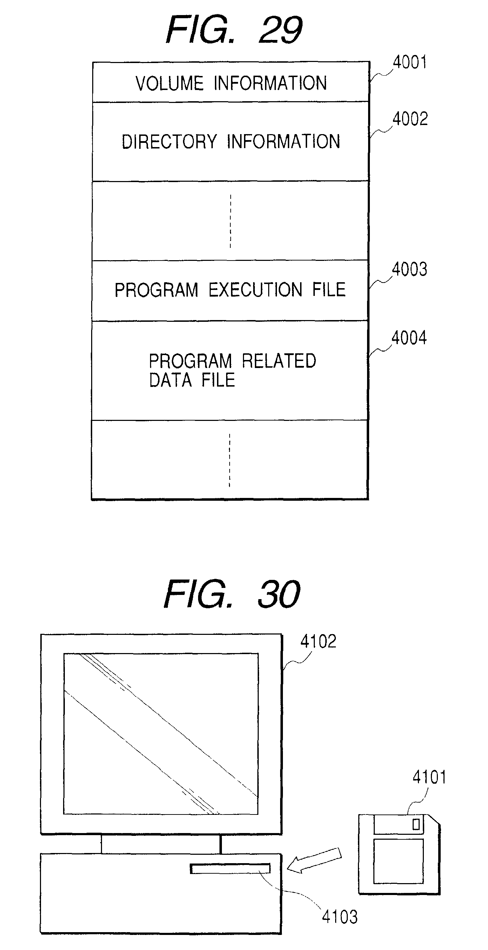

Fig. 30 is a conceptual diagram illustrating a process of supplying programs and related data for executing a remote operation assistance method of the invention, from a storage medium to an apparatus such as a computer. The programs and related data for executing the remote operation assistance method of the invention can be supplied by inserting a storage medium 4101 such as a floppy disk and a CD-ROM into a slot 4103 of a storage medium drive mounted on an apparatus 4102 such as a computer. Thereafter, the programs and related data for executing the remote operation assistance method of the invention read from the storage medium 4101 are once installed in a hard disk and then loaded in a RAM, or directly loaded in RAM without installing them in the hard disk. In this manner, the programs and related data can be used.

If the digital TV broadcast receiver of the first to fourth embodiments is made to execute the programs for executing the remote operation assistance method of the invention, the programs and related data are supplied to the digital TV broadcast receiver, for example, via a computer described with Fig. 30, or stored beforehand in the digital TV broadcast receiver.

Fig. 29 is a diagram showing an example of the structure the contents of a storage medium storing the programs and related data for executing the remote operation assistance method of this invention. In this example, the contents of the storage medium include volume information 4001, directory information 4002, a program execution file 4003, a program related data file 4004 and the like. The programs for executing the remote operation assistance method of the invention have program codes realizing the operations illustrated in each of the flow charts.

As described so far, the present invention provides a digital TV broadcast receiver, a remote operation terminal, a remote operation assistance system, a remote operation assistance method and a storage medium, suitable for controlling various operations of the broadcast receiver from a remote site. The operability of a digital TV broadcast receiver to be controlled from a remote site can be improved.

## Claims

1. A broadcast receiver comprising:
receiving means for receiving a broadcast signal in response to a request from an external terminal capable of communicating with the broadcast receiver, the broadcast signal being transmitted by multiplexing identification information for identifying the broadcast receiver with control information for controlling the broadcast receiver;
communication means for communicating with the external terminal;
extraction means for extracting information data regarding information designated by the control information in accordance with the identification information and control information contained in the received broadcast signal; and
control means for controlling to make said communication means transmit the information data regarding the information to the external terminal in response to reception of the control information.

2. A broadcast receiver according to claim 1, further comprising means for generating display data for displaying on display means of the external terminal, in accordance with the control information, wherein the information data contains the display data.

3. A broadcast receiver according to claim 2, wherein the display data is data for displaying an operation assistance screen for assisting an operation of the external terminal.

4. A broadcast receiver according to claim 3, wherein the operation assistance screen assists at least one operation of a record operation, a record reservation operation and a viewing reservation operation of video and audio data of a program received by the broadcast receiver, an operation of obtaining program information data and data broadcast data of the program, and a record operation of the data broadcast data of the program.

5. A broadcast receiver according to claim 2, further comprising:
initial screen setting means for setting information for structuring an initial screen; and
storage means for storing initial screen setting data set by said initial screen setting means,
wherein if the control information is initial screen transmission command information, said extraction means extracts the initial screen setting data from said storage means, said generating means generates the display data in accordance with the initial screen setting data, and said control means controls to transmit the display data to the external terminal.

6. A broadcast receiver according to claim 1, wherein the broadcast signal contains program information data and the control information is command information for transmitting the program information data to the external terminal.

7. A broadcast receiver according to claim 6, wherein the program information data is data regarding an electronic program guide EPG and contains information such as a channel name, a program name, a broadcast day and time, and program contents.

8. A broadcast receiver according to claim 1, wherein the broadcast signal contains data broadcast data, and the control information is command information for transmitting the data broadcast data to the external terminal.

9. A broadcast receiver according to claim 1, wherein said control means controls to the information data regarding the information to the external terminal at a predetermined time.

10. A broadcast receiver according to claim 1, wherein the external terminal is a portable terminal capable of mobile communications.

11. A broadcast receiver according to claim 1, wherein said control means further controls an operation of the broadcast receiver in accordance with the control information, and controls at least one operation of a record operation, a record reservation operation and a viewing reservation operation of video and audio data of a program contained in the broadcast signal, and a record operation of data broadcast data of the program.

12. A broadcast reception method comprising steps of:
receiving a broadcast signal in response to a request from an external terminal capable of communicating with a broadcast receiver, the broadcast signal being transmitted by multiplexing identification information for identifying the broadcast receiver with control information for controlling the broadcast receiver;
communicating with the external terminal;
extracting information data regarding information designated by the control information in accordance with the identification information and control information contained in the received broadcast signal; and
controlling to transmit the information data regarding the information to the external terminal in response to reception of the control information.

13. A broadcast reception method according to claim 12, further comprising a step of generating display data for displaying on display means of the external terminal, in accordance with the control information, wherein the information data contains the display data.

14. A broadcast reception method according to claim 13, wherein the display data is data for displaying an operation assistance screen for assisting an operation of the external terminal.

15. A broadcast reception method according to claim 14, wherein the operation assistance screen assists at least one operation of a record operation, a record reservation operation and a viewing reservation operation of video and audio data of a program received by the broadcast receiver, an operation of obtaining program information data and data broadcast data of the program, and a record operation of the data broadcast data of the program.

16. A broadcast reception method according to claim 13, further comprising steps of:
setting information for structuring an initial screen; and
storing the set initial screen setting data,
wherein if the control information is initial screen transmission command information, the stored initial screen setting data is read, the display data is generated in accordance with the initial screen setting data, and the display data is transmitted to the external terminal.

17. A broadcast reception method according to claim 12, wherein the broadcast signal contains program information data and the control information is command information for transmitting the program information data to the external terminal.

18. A broadcast reception method according to claim 17, wherein the program information data is data regarding an electronic program guide EPG and contains information such as a channel name, a program name, a broadcast day and time, and program contents.

19. A broadcast reception method according to claim 12, wherein the broadcast signal contains data broadcast data, and the control information is command information for transmitting the data broadcast data to the external terminal.

20. A broadcast reception method according to claim 12, wherein the information data regarding the information is transmitted to the external terminal at a predetermined time.

21. A broadcast reception method according to claim 12, wherein the external terminal is a portable terminal capable of mobile communications.

22. A broadcast reception method according to claim 12, wherein an operation of the broadcast receiver is controlled in accordance with the control information, and at least one operation of a record operation, a record reservation operation and a viewing reservation operation of video and audio data of a program contained in the broadcast signal, and a record operation of data broadcast data of the program is controlled.

23. A storage medium storing a program for executing a broadcast reception method, the broadcast reception method comprising steps of:
receiving a broadcast signal in response to a request from an external terminal capable of mobile communications with a broadcast receiver, the broadcast signal being transmitted by multiplexing identification information for identifying the broadcast receiver with control information for controlling the broadcast receiver;
communicating with the external terminal;
extracting information data regarding information designated by the control information in accordance with the identification information and control information contained in the received broadcast signal; and
controlling to transmit the information data regarding the information to the external terminal in response to reception of the control information.

24. A broadcast receiver comprising:
receiving means for receiving a broadcast signal in response to a request from a portable terminal capable of mobile communications with the broadcast receiver, the broadcast signal being transmitted by multiplexing identification information for identifying the broadcast receiver with control information for controlling the broadcast receiver;
operation control means for executing a control operation designated by the control information in accordance with the identification information and control information contained in the broadcast signal received by said receiving means;
communication means for communicating with the portable terminal; and
communication control means for controlling said communication means to communicate with the portable terminal in accordance with a control by said operation control means.

25. A broadcast receiver according to claim 24, further comprising extraction means for extracting information data regarding data designated by the control information, wherein said communication control means controls said communication means to transmit the information data extracted by said extraction means to the portable terminal.

26. A broadcast receiver according to claim 24, further comprising means for generating display data for displaying on display means of the portable terminal, in accordance with the control information, wherein the information data contains the display data.

27. A broadcast receiver according to claim 24 wherein the display data is data for displaying an operation assistance screen for assisting an operation of the portable terminal.

28. A broadcast receiver according to claim 27, wherein the operation assistance screen assists at least one operation of a record operation, a record reservation operation and a viewing reservation operation of video and audio data of a program received by the broadcast receiver, an operation of obtaining program information data and data broadcast data of the program, and a record operation of the data broadcast data of the program.

29. A broadcast receiver according to claim 27, wherein said operation control means controls at least one operation of a record operation, a record reservation operation and a viewing reservation operation of video and audio data of a program contained in the broadcast signal, and a record operation of data broadcast data of the program.

30. A digital television broadcast receiver comprising:
receiving means for receiving digital broadcast data;
extraction means for extracting program information data regarding a program from the digital broadcast data;
decoding means for decoding the program information data;
first screen structuring means for structuring a first user operation assistance screen for assisting a user of the receiver in accordance with the decoded data;
communication means for communicating with a remote operation terminal;
second screen structuring means for structuring a second user operation assistance screen for assisting a user of the remote operation terminal; and
control means for controlling to transmit display data for the second user operation assistance screen and identification information unique to the remote operation terminal from said communication means to the remote operation terminal.

31. A digital television broadcast receiver according to claim 30, wherein the first user operation assistance screen includes a screen constituted of electronic program guide EPG data contained in the broadcast data, and the second user operation assistance screen contains display data includes display data with the electronic program guide data replaced with characters and symbols.

32. A digital television broadcast receiver according to claim 30, wherein data of the second user operation assistance screen includes one of bit map image data, Joint Photographic Expert Group JPEG image data, HyperText Markup Language HTML described data, and eXtensible Markup Language XML described data.

33. A digital television broadcast receiver according to claim 30, wherein the second user operation assistance screen is a screen for assisting a record operation of video and audio data and data broadcast data of a program contained in the broadcast data.

34. A digital television broadcast receiver according to claim 30, wherein the remote operation terminal has displaying means for receiving the display data and identification data transmitted from said communication means and displaying the second user operation assistance screen in accordance with the received display data and identification information.

35. A digital television broadcast receiver according to claim 34, wherein the remote operation terminal has instructing means for instructing a control command for controlling the broadcast receiver in accordance with the second user operation assistance screen displayed by said displaying means, and transmitting means for transmitting control information regarding the instructed control command together with identification information unique to the broadcast receiver.

36. A digital television broadcast receiver according to claim 35, wherein the identification information unique to the broadcast receiver a viewer identification number regarding pay program viewing contained in the broadcast data received by the broadcast receiver.

37. A digital television broadcast receiver according to claim 35, wherein said receiving means receives the control information and the identification information unique to the broadcast receiver transmitted from the remote operation terminal, as an entitlement management message EMM transmitted by a broadcaster transmitting the broadcast data.

38. A digital television broadcast receiver according to claim 30, wherein said control means controls to transmit the second user operation assistance screen at a predetermined time from said communication means to the remote operation terminal.

39. A digital television broadcast receiver according to claim 30, wherein the identification information unique to the remote operation terminal is a phone number.

40. A digital television broadcast receiver according to claim 30, wherein the identification information unique to the remote operation terminal is an email address.

41. A digital television broadcast receiver according to claim 30, wherein the remote operation terminal has image pickup means for taking an image of a subject.

42. An external terminal comprising:
communication means for communicating with a broadcast receiver for receiving a broadcast transmitted by multiplexing identification information for identifying the broadcast receiver with control information for controlling the broadcast receiver, extracion information data regarding information designated by the control information in accordance with the identification information and control information contained in the received broadcast signal, and transmitting the information data regarding the information to the external terminal in response to reception of the control information;
receiving means for receiving the information data transmitted from the broadcast receiver via said communication means; and
display means for displaying a screen of the information regarding the information data received by said receiving means.

43. An external terminal according to claim 42, further comprising:
designating means for designating a control operation for controlling the broadcast receiver in accordance with the information screen displayed by said display means; and
transmitting means for transmitting the control information regarding the control operation designated by said designating means and the identification information to a broadcast transmitter to multiplex the control information and identification information into the broadcast signal.

44. A broadcast receiver control system comprising:
a broadcast transmitter, responsive to a request from an external terminal capable of communications with a broadcast receiver, for transmitting a broadcast signal by multiplexing identification information for identifying the broadcast receiver and control information for controlling the broadcast receiver;
said broadcast receiver deriving information data regarding information designated by the control information in accordance with the identification information and control information transmitted from said broadcast transmitter, and transmitting the information data to said external terminal; and an
external terminal adapted to receive the information data from said broadcast receiver and to display a screen of the information regarding the information data.
